# EUROPEAN PATENT SPECIFICATION

(11) **EP 4 008 599 B1**
(45) Date of publication and mention of the grant of the patent: **15.01.2025**
(21) Application number: 19940748.7
(22) Date of filing: 13.12.2019
(51) Int. Cl.: B60B 17/00, B60B 37/04, B61C 9/48, B61F 5/08, B61F 5/18, B61F 5/30, B61F 5/52, B61H 1/00, B61H 5/00, F16D 55/224

(54) **BOGIE AND RAIL VEHICLE**
DREHGESTELL UND SCHIENENFAHRZEUG
BOGIE ET VÉHICULE FERROVIAIRE

(30) Priority: 02.08.2019 CN 201910712852
(43) Date of publication of application: 08.06.2022
(73) Proprietor: CRRC TANGSHAN CO., LTD., Fengrun District Tangshan Hebei 063035 (CN)
(72) Inventor: CHEN, Yanhong, Tangshan, Hebei 063035 (CN); QIN, Chengwei, Tangshan, Hebei 063035 (CN); WANG, Junfeng, Tangshan, Hebei 063035 (CN); PEI, Peng, Tangshan, Hebei 063035 (CN); CHU, Bogang, Tangshan, Hebei 063035 (CN); ZHANG, Peng, Tangshan, Hebei 063035 (CN)
(74) Representative: Chung, Hoi Kan
(86) International application number: PCT/CN2019/125262
(87) International publication number: WO 2021/022751

(56) References cited:
- EP-A1- 2 944 534
- EP-A1- 3 299 247
- EP-A2- 2 202 127
- CN-A- 102 923 153
- CN-A- 103 600 749
- CN-A- 104 527 661
- CN-A- 105 313 913
- CN-A- 106 184 271
- CN-A- 107 264 565
- CN-U- 204 488 808
- CN-U- 205 601 849
- DE-T2- 69 202 552

## Description

### TECHNICAL FIELD

This application relates to a rail vehicle running technology, and in particular, to a bogie and a rail vehicle.

### BACKGROUND

Rail vehicles are an important transportation link connecting cities, and have gradually become the main means of transportation in cities. Rail vehicles are also the main carrier for cargo transportation. The rail vehicle mainly includes: a vehicle body and a bogie arranged under the vehicle body. The bogie is configured to carry the vehicle body and enable the functions of running and steering.

A traditional bogie mainly includes: a frame, wheel sets, a force transmission device, braking devices and buffer devices. A powered bogie also includes driving devices. The frame functions as a main frame of the bogie, and the other parts are associated with the frame. The frame is usually of an "H"-shaped structure consisting of two parallel side beams and a cross beam connected between middle parts of the two side beams. The frame itself is manufactured as a whole, and in the subsequent process of assembling other parts, the frame is also hoisted as a whole. Because the frame has a large overall size and a relatively heavy weight, its hoisting process is onerous, and after the frame is hoisted in place, the process of alignment is also relatively difficult. For this reason, the assembly of the traditional bogie is difficult, and it requires a lot of manpower and material resources and takes a long time.

EP2944534A discloses a railcar bogie having a bogie frame including a cross beam supporting a car body of a railcar. CN105313913A discloses an ultra high speed test CRH train bogie having a horizontal and longitudinal beam integrated type tray frame. CN102923153A discloses a bogie of a high-speed motor train unit having a brand-new bogie structure and a hanging connection and traction mode. EP2202127A discloses a bogie of a railway vehicle capable of reducing the stress applied to the welding portion between brake gear attachments and transoms.

### SUMMARY

Embodiments of this application provide a bogie and a rail vehicle, which can reduce the assembly difficulty of the bogie.

An embodiment of a first aspect of this application provides a bogie, including:
two wheel sets arranged in parallel, each wheel set including an axle and two wheels symmetrically arranged on the axle;
two side beams spanning over the two wheel sets, the two side beams being parallel with each other;
axle boxes arranged on the axles, located under the side beams adjacent to inner sides of their respective wheels, and configured to support the side beams;
primary suspension devices, each primary suspension device being arranged between one of the axles boxes and the respective side beam.
two connection bases each arranged at a middle part of respective side beam, each of connection bases is connected to the axle boxes of the respective side beam by simplex pull rods, and wherein opposite simplex pull rods of the two side beams are connected by anti-roll links to exert a downward vertical force when there is a difference in elevation between the wheels; and
a force transmission device connected between the two connection bases, the force transmission device being further configured to be connected to a vehicle body.

An embodiment of a second aspect of the present application provides a rail vehicle, including: the bogie as described above.

According to the technical solution of the embodiment of this application, two independent side beams span over the two wheel sets, the two side beams are parallel to each other, and ends of the side beams are located above the axle boxes adjacent to inner sides of their respective wheels and supported by the axle boxes; the primary suspension devices are arranged between the axle boxes and the side beams; one connection base is arranged at the middle part of each side beam, each of connection bases is connected to the axle boxes of the respective side beam by simplex pull rods, and wherein opposite simplex pull rods of the two side beams are connected by anti-roll links to exert a downward vertical force when there is a difference in elevation between the wheels, and the force transmission device is connected between the two connection bases to transmit a traction force or braking force for the vehicle body. Since the two side beams are independent, the advantages of small size, light weight and low manufacturing difficulty are achieved. In the subsequent assembly process with other parts, the side beams can be hoisted easily and conveniently, which can simplify the operation of alignment.

### BRIEF DESCRIPTION OF THE DRAWINGS

The drawings described herein are intended to provide a further understanding of this application and constitute a part of this application. The illustrative embodiments of this application and the description thereof are for explaining this application and do not constitute an undue limitation of this application. In the figures:
FIG. 1 is a schematic structural diagram of a bogie according to a first embodiment of this application;
FIG. 2 is an outside schematic diagram of a connection base according to a second embodiment of this application;
FIG. 3 is an inside schematic diagram of the connection base according to the second embodiment of this application;
FIG. 4 is an outside schematic diagram of an assembly of a side beam and the connection base according to the second embodiment of this application;
FIG. 5 is an inside schematic diagram of the assembly of the side beam and the connection base according to the second embodiment of this application;
FIG. 6 is an exploded view of the connection base according to the second embodiment of this application;
FIG. 7 is a schematic structural diagram of the side beam in the bogie according to the second embodiment of this application;
FIG. 8 is a side plan view of an assembly of the side beam and an axle box through a primary suspension device in the bogie according to the second embodiment of this application;
FIG. 9 is an exploded view of an assembly of one end of the side beam with the primary suspension device and the axle box in the bogie according to the second embodiment of this application;
FIG. 10 is a schematic structural diagram of the primary suspension device in the bogie according to the second embodiment of this application;
FIG. 11 is a cross-sectional view of the primary suspension device in the bogie according to the second embodiment of this application;
FIG. 12 is an exploded view of an assembly of the side beam and the connection base in the bogie according to the second embodiment of this application;
FIG. 13 is a cross-sectional view of the assembly of the side beam and the connection base in the bogie according to the second embodiment of this application;
FIG. 14 is a schematic structural diagram of a secondary suspension device according to the second embodiment of this application;
FIG. 15 is a cross-sectional view of the secondary suspension device according to the second embodiment of this application;
FIG. 16 is a schematic structural diagram of an assembly of a force transmission device with the connection base and the side beam according to the second embodiment of this application;
FIG. 17 is a schematic structural diagram of the force transmission device according to the second embodiment of this application;
FIG. 18 is an exploded view of the force transmission device according to the second embodiment of this application;
FIG. 19 is a schematic structural diagram of a traction beam in the force transmission device according to the second embodiment of this application;
FIG. 20 is an enlarged view of area B in FIG. 18;
FIG. 21 is an exploded view of a traction buffer assembly in the force transmission device according to the second embodiment of this application;
FIG. 22 is a cross-sectional view of an assembly of the force transmission device and the connection base according to the second embodiment of this application;
FIG. 23 is an enlarged view of area C in FIG. 22;
FIG. 24 is an exploded view of another assembly form of the force transmission device and the connection base according to the second embodiment of this application;
FIG. 25 is a cross-sectional view of the other assembly form of the force transmission device and the connection base according to the second embodiment of this application;
FIG. 26 is an enlarged view of area D in FIG. 25;
FIG. 27 is a schematic structural diagram of a traction buffer connecting sleeve in the force transmission device according to the second embodiment of this application;
FIG. 28 is a schematic structural diagram of an arrangement of a simplex pull rod between the connection base and the axle box according to the second embodiment of this application;
FIG. 29 is an exploded view of an assembly of the simplex pull rod with a first pull rod connecting assembly and a second pull rod connecting assembly according to the second embodiment of this application;
FIG. 30 is an exploded view of an assembly of the simplex pull rod and the axle box according to the second embodiment of this application;
FIG. 31 is a schematic structural diagram of the assembly of the simplex pull rod and the axle box according to the second embodiment of this application;
FIG. 32 is a cross-sectional view of a first mandrel according to the second embodiment of this application;
FIG. 33 is an exploded view of an assembly of the simplex pull rod and the connection base according to the second embodiment of this application;
FIG. 34 is a schematic structural diagram of the assembly of the simplex pull rod and the connection base according to the second embodiment of this application;
FIG. 35 is a schematic structural diagram of a wheel set and the axle box according to the second embodiment of this application;
FIG. 36 is a schematic structural diagram of a wheel according to the second embodiment of this application;
FIG. 37 is an exploded view of the wheel according to the second embodiment of this application;
FIG. 38 is a cross-sectional view of the wheel according to the second embodiment of this application;
FIG. 39 is an enlarged view of area E in FIG. 38;
FIG. 40 is a schematic structural diagram of a powered bogie according to the second embodiment of this application;
FIG. 41 is a cross-sectional view of the wheel set, the axle boxes and driving devices according to the second embodiment of this application;
FIG. 42 is a schematic structural diagram of an assembly of a balance rod and the connection base according to the second embodiment of this application;
FIG. 43 is an exploded view of the assembly of the balance rod and the connection base according to the second embodiment of this application;
FIG. 44 is a schematic structural diagram of connection of a braking device and the connection base according to the second embodiment of this application;
FIG. 45 is a schematic structural diagram of the braking device according to the second embodiment of this application;
FIG. 46 is an exploded view of an assembly of a braking unit connector in the braking device and the connection base according to the second embodiment of this application;
FIG. 47 is a cross-sectional view of the assembly of the braking unit connector in the braking device and the connection base according to the second embodiment of this application;
FIG. 48 is a schematic structural diagram of connection of the connection base and various dampers according to the second embodiment of this application; and
FIG. 49 is a schematic structural diagram of connection of a lateral damper with a traction pin and the connection base according to the second embodiment of this application.

### Reference numerals:

11-axle; 12-wheel; 121-wheel boss; 1211-axle hole; 1212-spoke plate; 1213-stepped surface; 1214-oil groove; 1215-oil filler hole; 122-wheel rim; 1221-tread; 1222-wheel flange; 1223-limiting flange; 1224-wheel ring assembling groove; 123-wheel ring; 1231-wheel ring notch; 124-brake disc; 13-axle box; 131-box body; 132-bearing; 133-pull rod threaded hole; 134-pull rod connecting protrusion;

2-side beam; 24-side beam connecting pin; 25-primary positioning pin; 26-primary accommodating recess;

3-connection base; 31-first base body; 311-base body bottom plate; 312-base body connecting part; 313-base body weight reduction hole; 32-second base body; 321-base body top plate; 3211-side beam connecting hole; 3212-balance rod connecting protrusion; 3213-balance rod threaded hole; 322-second base body inner side plate; 3221-traction beam connecting sleeve; 3222-connecting flange; 323-second base body outer side plate; 324-damper mounting portion; 331-base body connecting bolt; 332-base body connecting nut; 333-base body connecting gasket; 34-traction beam mounting hole; 35-pull rod connecting column; 351-pull rod connecting hole; 36-brake mounting base; 361-second vertical mounting surface; 362-mounting base threaded hole; 363-support key;

4-force transmission device; 41-traction beam; 411-longitudinal frame; 4111-traction bolt connecting hole; 412-lateral frame; 4121-frame edge connecting hole; 42-traction pin; 421-vehicle body mounting portion; 422-vehicle body connecting hole; 43-traction buffer; 431-surrounding baffle plate; 432-traction buffer assembly; 4321-first metal connector; 4322-rubber connector; 4323-second metal connector; 4324-third metal connector; 434-traction buffer connecting bolt; 435-traction buffer adjusting gasket; 4351-gasket opening; 44-traction connecting pin; 45-traction connecting bolt; 46-traction buffer connecting sleeve; 461-outer traction buffer sleeve; 462-inner traction buffer sleeve; 463-middle traction buffer sleeve; 464-buffer gap;

5-driving device; 51-direct drive motor; 511-motor housing; 512-rotor; 52-balance rod; 521-balance rod connecting hole; 531-balance rod mandrel; 5311-balance rod mandrel connecting hole; 532-balance rod connecting bolt;

6-braking device; 61-braking unit; 62-braking unit connector; 621-first vertical mounting surface; 622-brake connector bolt hole; 623-brake connecting bolt; 624-support groove;

7-primary suspension device; 701-primary rigid support layer; 702-primary elastic buffer layer; 703-primary positioning hole; 704-primary rigid support base layer;

8-secondary suspension device; 81-secondary rigid support layer; 82-secondary elastic buffer layer; 83-secondary connecting hole;

91-anti-yaw damper; 92-anti-roll torsion bar; 93-vertical damper; 94- lateral damper; 941-lateral damper mounting base; 95-simplex pull rod; 951-first pull rod hole; 952-second pull rod hole; 95a1-first mandrel; 95a11-first mandrel bolt hole; 95a12-first mandrel body; 95a13-first outer mandrel sleeve; 95a14-first mandrel buffer sleeve; 95a2-pull rod connecting stud; 95a3-first pull rod connecting nut; 95b1-second mandrel; 95b11-second mandrel bolt hole; 95b2-pull rod connecting bolt; 95b3-second pull rod connecting nut; 96-anti-roll link; 97-damper mounting base.

### DETAILED DESCRIPTION

To make the technical solutions and advantages of this application clearer, the exemplary embodiments of this application will be described in further detail below with reference to the accompanying drawings. Obviously, the described embodiments are only a part, not exhaustive of all embodiments of this application. It should be noted that embodiments in this application and the features in the embodiments may be combined with each other without conflict.

### First embodiment

This embodiment provides a bogie which can be applied to a rail vehicle. The rail vehicle may be a diesel locomotive or an electric locomotive, and may be an EMU, a subway train, a light-rail train, a tramcar, or the like.

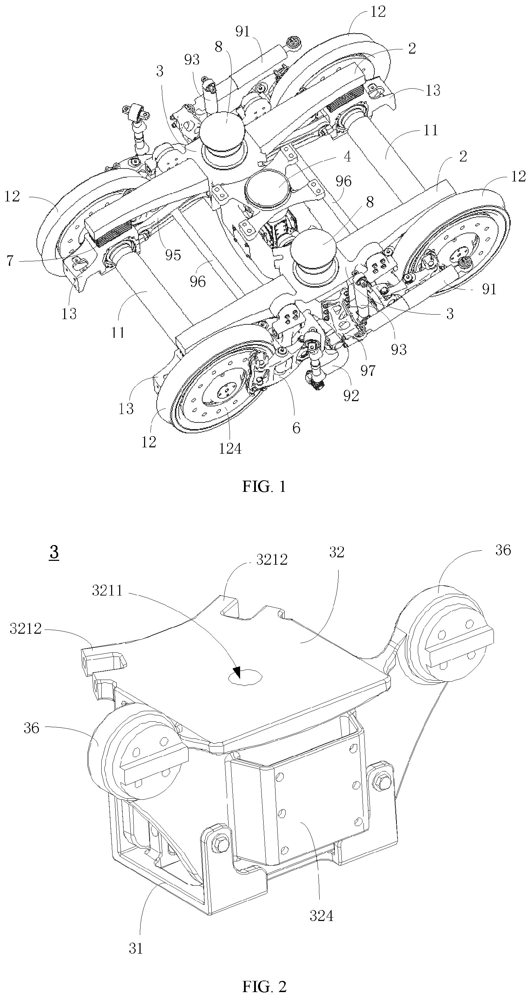

FIG. 1 is a schematic structural diagram of a bogie according to a first embodiment of this application. As shown in FIG. 1, the bogie according to this embodiment includes wheel sets, side beams, axle boxes, connection bases, a force transmission device, or the like.

Wherein, two wheel sets are provided and arranged in parallel. The wheel set includes an axle 11 and wheels 12, and two wheels 12 are provided and symmetrically arranged on the axle. The axle 11 is connected with the wheels 12, and rotation of the axle 11 can drive the wheels 12 to rotate synchronously. Two axle boxes 13 are provided and symmetrically arranged on the axle 11 and located at inner sides of the wheels 12. A bearing is arranged between the axle box 13 and the axle 11, so that the axle 11 can rotate relative to the axle box 13. In this embodiment, a direction of a centerline of the axle 11 is referred to as a lateral direction, a direction in which the rail vehicle travels is referred to as a longitudinal direction, and a direction which is perpendicular to a horizontal plane is referred to as a vertical direction.

Two side beams 2 are provided and independent of each other. The two side beams are parallel, extend in the longitudinal direction, and respectively span over the two wheel sets. Two ends of the side beam 2 are located above the axle box 13, and the axle box 13 is configured to support the side beam 2.

A primary suspension device 7 may be arranged between the side beam 2 and the axle box 13 to support the side beam 2 and buffer the vertical force between the side beam 2 and the axle box 13.

One connection base 3 is arranged at the middle part of each side beam 2, the force transmission device 4 is connected between the two connection bases 3, and a top of the force transmission device 4 is further configured to be connected to a vehicle body. The force transmission device 4 is configured to transmit a traction force or braking force to the vehicle body. A buffer device may be arranged between the connection base 3 and the vehicle body and configured to support the vehicle body and transmit a vertical force.

If the bogie is provided with driving devices, the bogie is regarded as a powered bogie; if without a driving device, the bogie is regarded as a non-powered bogie. The bogie may further be provided with braking devices for clamping the wheels 12 to carry out braking in a braking state.

The transmission path of the vertical force of the bogie is: vehicle body-connection base-side beam-axle box-axle-wheel-track. The transmission path of a lateral force is: vehicle body-connection base and side beam-axle box-axle-wheel-track, and vehicle body-force transmission device-connection base and side beam-axle box-axle-track. The transmission path of the braking force is: braking device-wheel-axle-axle box-connection base and side beam-force transmission device-vehicle body. The transmission path of the longitudinal force (traction force) of the powered bogie is: driving device-axle-axle box-connection base and side beam-force transmission device-vehicle body.

According to the technical solution of this embodiment, two independent side beams span over the two wheel sets, the two side beams are parallel to each other, and ends of the side beams are located above the axle boxes and supported by the axle boxes; the primary suspension devices are arranged between the axle boxes and the side beams; one connection base is arranged at the middle part of each side beam, and the force transmission device is connected between the two connection bases to provide the traction force or braking force for the vehicle body. Since the two side beams are independent, the advantages of small size, light weight and low manufacturing difficulty are achieved. In the subsequent assembly process with other parts, the side beams can be hoisted easily and conveniently, which can simplify the operation of alignment.

The connection base 3 can be provided with corresponding connecting openings for connection with a driving device 5 and a braking device 6. The bogie may further be provided with structures, such as a lateral damper, a vertical damper, an anti-yaw damper, and an anti-roll torsion bar, all of which can be connected to the connection base 3.

A secondary suspension device 8 may be arranged on the connection base 3 to support the vehicle body and also to buffer the vertical force between the vehicle body and the connection base 3.

### Second embodiment

This embodiment provides a specific implementation of a bogie.

As shown in FIG. 1, the bogie according to this embodiment includes two mutually independent side beams 2, and the two side beams 2 are parallel and extend in the longitudinal direction. The axle box 13 is located at an inner side of a wheel 12 and is close to the wheel 12. An end of the side beam 2 is connected to the axle box 13 through the primary suspension device 7, and the primary suspension device 7 functions to support the side beam 2 and buffer a vertical force.

One connection base 3 is arranged at the middle part of each side beam 2, and a secondary suspension device 8 is arranged at the top of the connection base 3. The secondary suspension device 8 is connected to a vehicle body at the top and functions to support the vehicle body and buffer the vertical force.

The force transmission device 4 is connected between the two connection bases 3 and configured to transmit a lateral force. The force transmission device 4 is connected with the vehicle body at the top and configured to transmit a traction force or braking force to the vehicle body.

An outer surface of the connection base 3 is provided with brake mounting bases for mounting braking devices 6. A braking unit in the braking device 6 extends to two sides of the wheel 12 and clamps the wheel 12 to carry out braking in a braking state.

The outer surface of the connection base 3 is provided with a damper mounting portion 324 for connecting an anti-yaw damper 91, an anti-roll torsion bar 92 and a vertical damper 93.

A detailed description of each part in the bogie is provided as follows.

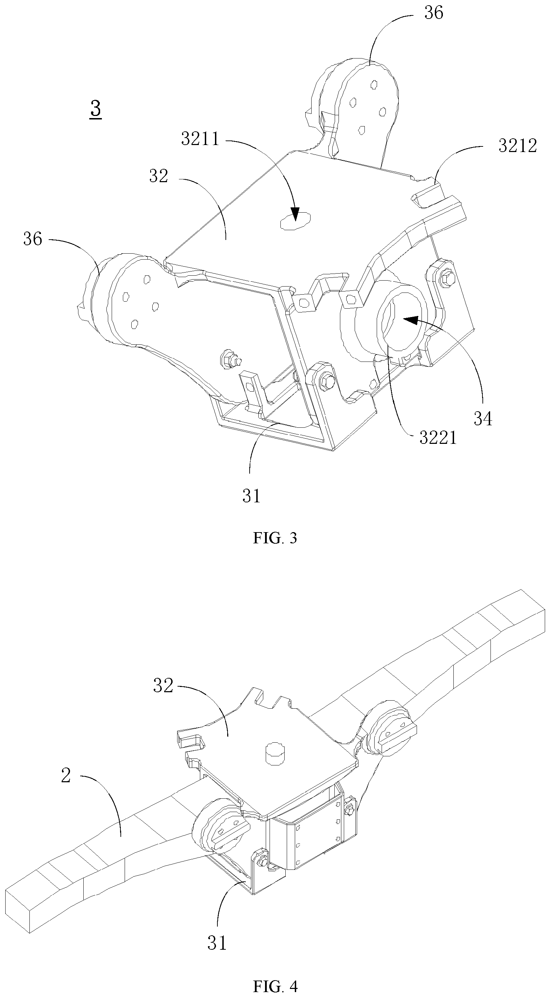

First, the implementation of the connection base 3 will be described in detail. FIG. 2 is an outside schematic diagram of the connection base according to the second embodiment of this application; and FIG. 3 is an inside schematic diagram of the connection base according to the second embodiment of this application. FIG. 2 is obtained from the view angle of the outside of the bogie, and FIG. 3 is obtained from the view angle of the inside of the bogie. As shown in FIGS. 2 and 3, the connection base 3 is of a box-shaped structure and is transparent in its longitudinal direction.

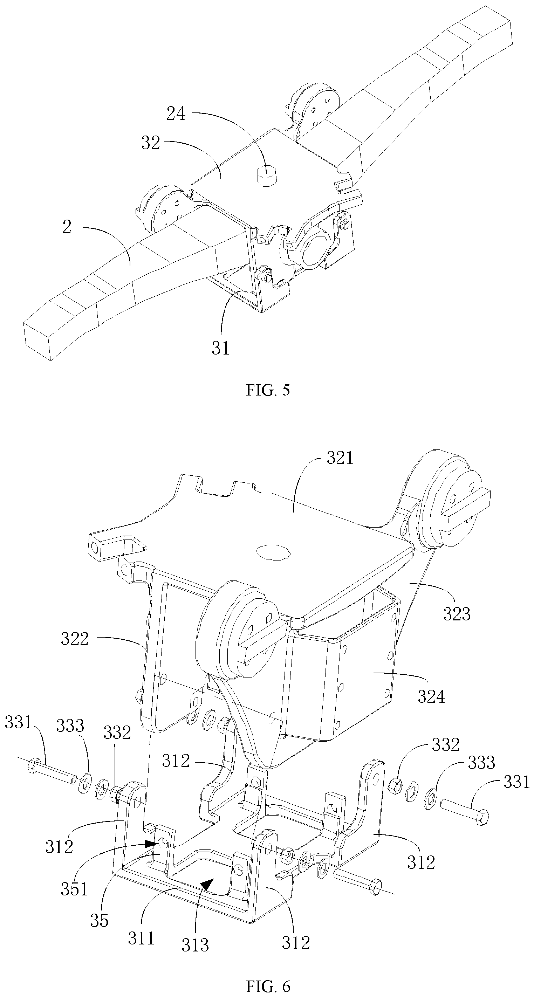

FIG. 4 is an outside schematic diagram of an assembly of the side beam and the connection base according to the second embodiment of this application; and FIG. 5 is an inside schematic diagram of the assembly of the side beam and the connection base according to the second embodiment of this application. As shown in FIGS. 4 and 5, the side beam 2 passes through the connection base 3, and the top inner surface of the connection base 3 and the side beam 2 come into contact and are assembled.

The connection base 3 can be of an integral structure, or can be an assembly of several parts. This embodiment provides a specific implementation of the connection base 3. FIG. 6 is an exploded view of the connection base according to the second embodiment of this application. As shown in FIG. 6, the connection base 3 mainly includes a first base body 31 and a second base body 32. The second base body 32 is located above the first base body 31 and connected with the first base body 31 to form the box-shaped structure. The first base body 31 and the second base body 32 define a passage through which the side beam 2 can pass.

Specifically, the second base body 32 mainly includes: a base body top plate 321, a second base body inner side plate 322, and a second base body outer side plate 323. The base body top plate 321 is parallel to the horizontal plane and is generally rectangular; in other words, the base body top plate 321 has four edges. An edge of the base body top plate 321 at a side facing the force transmission device is referred to as a lateral inner edge, and an edge at a side away from the force transmission device is referred to as a lateral outer edge.

The second base body inner side plate 322 is perpendicular to the lateral direction, and the top thereof is connected to the lateral inner edge of the base body top plate 321. The second base body outer side plate 323 is perpendicular to the lateral direction, and the top thereof is connected to the lateral outer edge of the base body top plate 321. A lateral distance between the second base body inner side plate 322 and the second base body outer side plate 323 is greater than a lateral width of the middle part of the side beam 2, so that the side beam 2 can pass through a gap between the second base body inner side plate 322 and the second base body outer side plate 323.

The first base body 31 mainly includes: a base body bottom plate 311 and base body connecting parts 312. The base body bottom plate 311 is substantially parallel to the horizontal direction and is substantially rectangular. A bottom end of the base body connecting part 312 is connected to the base body bottom plate 311 and a top end of the base body connecting part 312 is configured to be connected with the second base body 32. Specifically, four base body connecting parts 312 are provided and symmetrically arranged pairwise on inner and outer edges of the base body bottom plate 311 and are close to top corners.

A distance between inner surfaces of the two base body connecting parts 312 symmetrically arranged on inner and outer sides is greater than the distance between outer surfaces of the above-mentioned second base body inner side plate 322 and second base body outer side plate 323, so that the second base body inner side plate 322 and the second base body outer side plate 323 can be inserted between the two base body connecting parts 312 symmetrically arranged on the inner and outer sides.

Connection between the first base body 31 and the second base body 32 may be implemented by means of welding, bolting, or the like. In this embodiment, the connection is implemented by means of bolting, or the like. Specifically, bolt holes are respectively formed in the second base body inner side plate 322 and the second base body outer side plate 323, and bolt holes are correspondingly formed in the base body connecting parts 312. A base body connecting bolt 331 passes through the bolt hole in the base body connecting part 312 and the bolt hole in the second base body inner side plate 322 (or the second base body outer side plate 323) in sequence, and is then fixed with a base body connecting nut 332, referring to an assembly centerline in FIG. 6.

In the case of connection by virtue of the above-mentioned base body connecting bolt 331, a necessary number of base body connecting gaskets 333 can be appropriately arranged to meet the assembly requirements and reach the assembly standard.

The first base body 31 may be appropriately provided with a base body weight reduction hole 313 to reduce the weight of the connection base 3, which facilitates reduction of the weight of the entire bogie.

Next, the implementation of the side beam 2 will be described in detail.

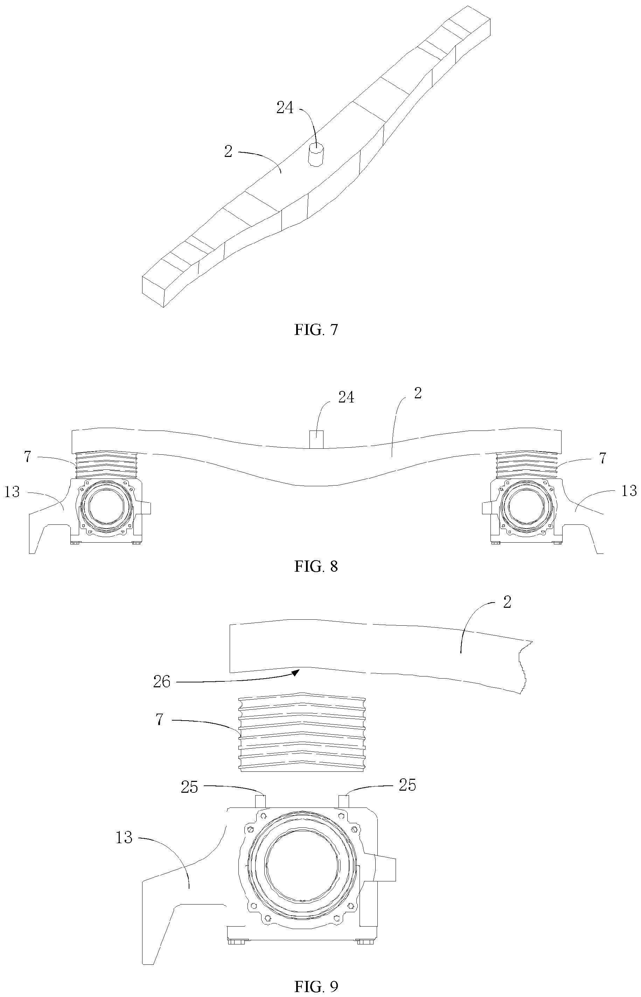

FIG. 7 is a schematic structural diagram of the side beam in the bogie according to the second embodiment of this application. As shown in FIGS. 1 and 7, the side beam 2 according to this embodiment is of a box-shaped structure, which may be welded by steel plates, or may be made of a carbon fiber or glass fiber material. In terms of the lateral width, the side beam 2 is wide in the middle and narrow at two ends, and in terms of the vertical thickness, the side beam 2 is thick in the middle and thin at two ends. The middle part of the side beam is recessed downward to form a fish belly shape, which improves the strength of the middle part of the side beam 2.

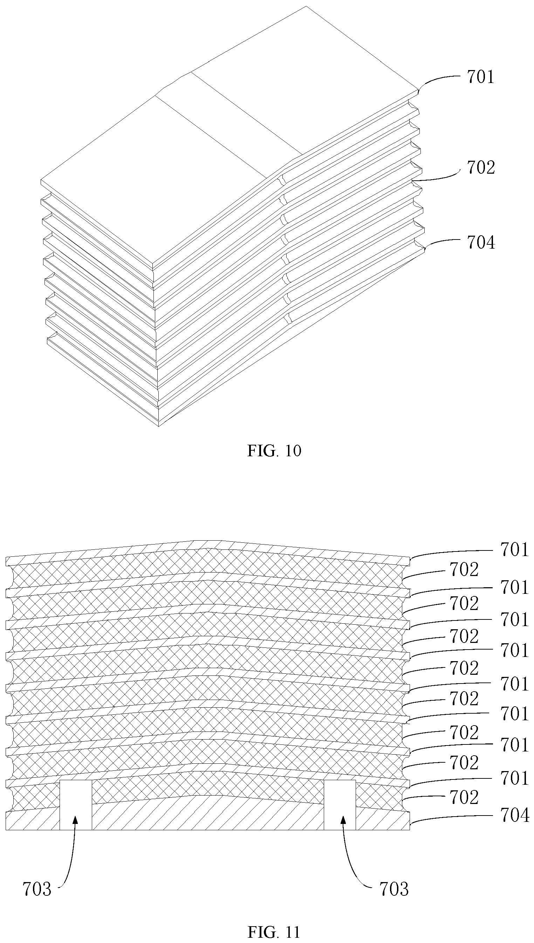

FIG. 8 is a side plan view of an assembly of the side beam and an axle box through a primary suspension device in the bogie according to the second embodiment of this application; FIG. 9 is an exploded view of an assembly of one end of the side beam with the primary suspension device and the axle box in the bogie according to the second embodiment of this application; FIG. 10 is a schematic structural diagram of the primary suspension device in the bogie according to the second embodiment of this application; and FIG. 11 is a cross-sectional view of the primary suspension device in the bogie according to the second embodiment of this application.

As shown in FIGS. 8 and 9, each end of the side beam 2 is supported by the primary suspension device 7, and a bottom end of the primary suspension device 7 is connected to the axle box 13. The implementation of the primary suspension device 7 will be described in detail as follows.

As shown in FIGS. 10 and 11, the primary suspension device 7 includes: primary rigid support layers 701, primary elastic buffer layers 702 and a primary rigid support base layer 704. The primary rigid support base layer 704 is arranged at the bottom end, so as to be in contact with the axle box 13. The primary elastic buffer layers 702 and the primary rigid support layers 701 are arranged above the primary rigid support base layer 704 and alternately stacked, and the primary elastic buffer layer 702 is in contact with the primary rigid support base layer 704. The primary rigid support layer 701 is arranged at the top end, so as to come into contact with a bottom surface of the side beam 2.

The above-mentioned primary rigid support base layer 704 and the primary rigid support layer 701 can be made of a rigid material and mainly play a supporting role to keep the overall shape of the primary suspension device 7 unchanged. The primary elastic buffer layer 702 can be made of an elastic material and can be elastically deformed to buffer the vertical force between the side beam 2 and the axle box 13. The primary rigid support layer 701 and the primary rigid support base layer 704 can be made of a metal material as metal layers, and the primary elastic buffer layer 702 can be made of rubber as a rubber layer. The primary rigid support layers 701, the primary elastic buffer layers 702 and the primary rigid support base layer 704 are fixed into a whole by means of vulcanization.

The top surface of the primary suspension device 7 is shaped to be high in the middle and low at both ends. Correspondingly, a primary accommodating recess 26 is formed at the bottom surface of each end of the side beam 2, and the primary accommodating recess 26 matches the top surface of the primary suspension device 7 in shape, so that the top of the primary suspension device 7 can be accommodated in the primary accommodating recess 26. During the assembly process of the side beam 2 and the primary suspension device 7, the effect of rapid positioning and assembly can be achieved, and the production efficiency can be improved.

Moreover, if the side beam 2 is made of a fiber material, such as a carbon fiber and a glass fiber, the side beam 2 has certain elastic deformation capability. When subjected to the vertical pressure of the vehicle body, the middle part of the side beam 2 is deformed to some degree and the longitudinal distance between the two ends of the side beam 2 is reduced, causing the ends of the side beam 2 to move for a certain distance longitudinally relative to the primary suspension devices 7. The above-mentioned positioning assembly of the primary suspension devices 7 and the side beam 2 can get adapted to the longitudinal movement of the side beam 2. In other words, the primary suspension devices 7 will not hinder the longitudinal movement of the side beam 2.

Specifically, the bottom surface of the primary rigid support base layer 704 is configured as a plane, and the middle part of the top surface of the primary rigid support base layer 704 protrudes upward to form a shape with a high middle and low ends. The primary elastic buffer layer 702 is of a plate-like structure with a uniform thickness and an upwardly protruding middle part, and the protrusion matches the top surface of the primary rigid support base layer 704 in shape. The primary rigid support layer 701 is of a plate-like structure with a uniform thickness and an upwardly protruding middle part, and the protrusion matches the top surface of the primary rigid support base layer 704 in shape.

Primary positioning holes 703 are formed from the bottom surface of the primary rigid support base layer 704 to the inside. The depth of the primary positioning holes 703 matches the length of primary positioning pins 25 arranged on the axle box 13. The primary positioning pins 25 can be inserted into the primary positioning holes 703 correspondingly, so that there is no relative movement in a horizontal direction between the axle box 13 and the primary suspension device 7.

Certainly, in addition to the above-mentioned implementation of this embodiment, other implementations may also be adopted. For example, a protrusion is formed at the bottom surface of each end of the side beam 2 and a recess is correspondingly formed at the top surface of the primary suspension device 7; in this way, the same rapid positioning effect can also be achieved.

The assembly of the side beam 2 and the connection base 3 can be implemented as follows.

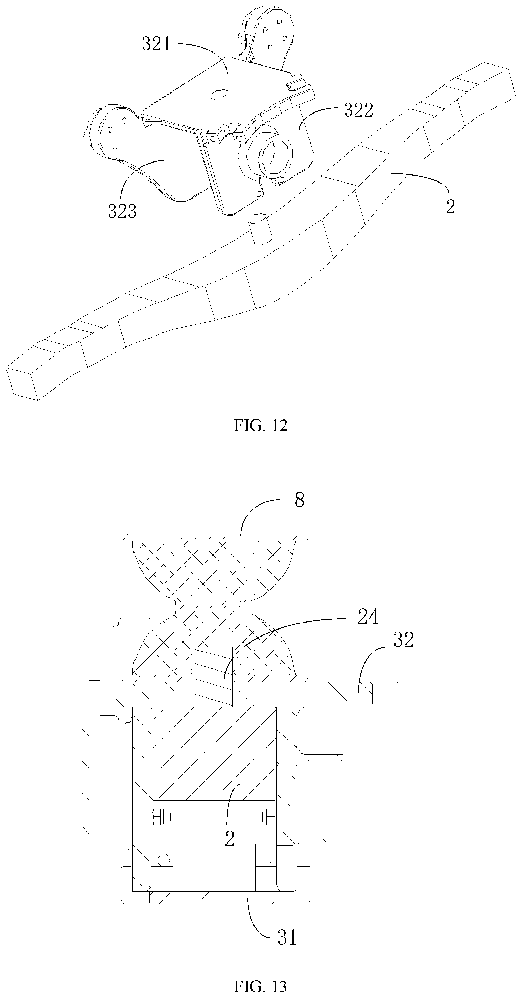

FIG. 12 is an exploded view of an assembly of the side beam and the connection base in the bogie according to the second embodiment of this application; and FIG. 13 is a cross-sectional view of the assembly of the side beam and the connection base in the bogie according to the second embodiment of this application. As shown in FIGS. 12 and 13, the second base body inner side plate 322 and the second base body outer side plate 323 in the second base body 32 respectively extend downward from two sides of the side beam 2 to be connected with the base body connecting part 312 in the first base body 31, so that the side beam 2 is limited within an area defined by the first base body 31 and the second base body 32.

The above-mentioned side beam 2 and the connection base 3 can be assembled in various ways. The side beam 2 and the connection base 3 can be fixedly connected or can be movably connected. This embodiment provides a specific connection manner: as shown in FIGS. 7, 8, 13 and 14, the upper surface of the side beam 2 is provided with a side beam connecting pin 24 extending upward. As shown in FIGS. 2 and 3, a side beam connecting hole 3211 is correspondingly formed at the top of the connection base 3 (specifically, in the base body top plate 321). The side beam connecting pin 24 passes upward through the side beam connecting hole 3211 to limit the horizontal movement of the side beam 2, referring to FIGS. 5, 12 and 13.

The connection between the secondary suspension device 8 and the connection base 3 can be set as follows on the basis of the above-mentioned implementation. A secondary connecting hole is formed at the bottom of the secondary suspension device 8. The above-mentioned side beam connecting pin 24 passes upward through the connection base 3 and is then inserted into the secondary connecting hole to limit the horizontal movement of the secondary suspension device 8, referring to FIG. 13.

The bottom end of the side beam connecting pin 24 can be fixed on the upper surface of the side beam 2, and the top end of the side beam connecting pin 24 is a free end.

Alternatively, both the top and bottom ends of the side beam connecting pin 24 are movable ends. A blind hole is formed in the side beam 2, the bottom end of the side beam connecting pin 24 is inserted into the blind hole, and the top end of the side beam connecting pin 24 passes upward through the connection base 3, and is then inserted into the secondary suspension device 8.

Alternatively, the top end of the side beam connecting pin 24 is fixed to the bottom end of the secondary suspension device 8, and the bottom end of the side beam connecting pin 24 passes downward through the connection base 3 and is then inserted into the blind hole formed in the side beam 2.

Alternatively, in the connection base 3, the upper and lower surfaces of the base body top plate 321 are each provided with a connecting pin; the connecting pin arranged on the upper surface is inserted upward into the secondary suspension device 8, and the connecting pin arranged on the lower surface is inserted downward into the blind hole in the side beam 2.

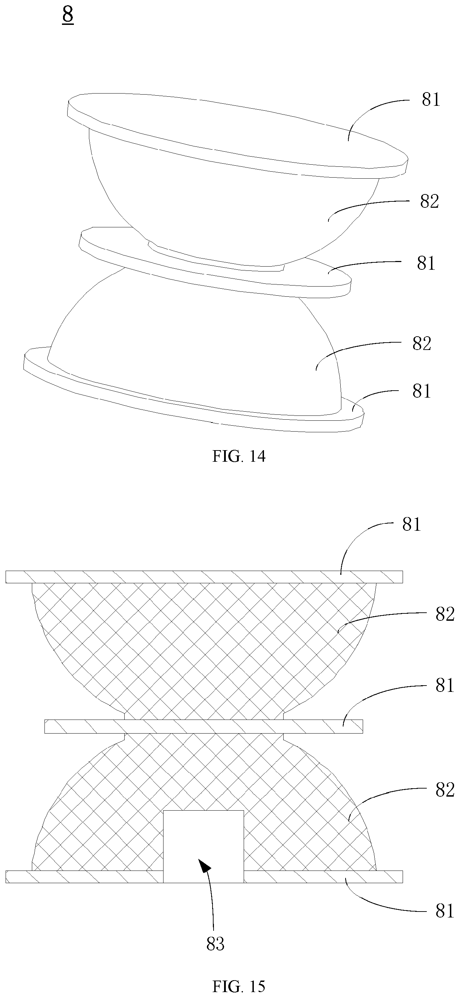

The above-mentioned secondary suspension device 8 may be configured as a structure commonly used in the field, such as a steel spring, an air spring, a rubber pile, or the like, or may also adopt the structure of this embodiment. FIG. 14 is a schematic structural diagram of the secondary suspension device according to the second embodiment of this application; and FIG. 15 is a cross-sectional view of the secondary suspension device according to the second embodiment of this application. As shown in FIGS. 14 and 15, the secondary suspension device 8 includes: secondary rigid support layers 81 and secondary elastic buffer layers 82 that are alternately stacked, and the secondary rigid support layers 81 are located at the outermost sides. The secondary rigid support layer 81 at the top end is in contact with the vehicle body, and the secondary rigid support layer 81 at the bottom end is in contact with the connection base 3. The secondary rigid support layer 81 can be made of a rigid material and mainly plays a supporting role to keep the overall shape of the secondary suspension device 8 basically unchanged. The secondary elastic buffer layer 82 can be made of an elastic material and can be elastically deformed to buffer the vertical force between the vehicle body and the connection base. For example, the secondary rigid support layer 81 can be made of a metal material as a metal layer, and the secondary elastic buffer layer 82 can be made of rubber as a rubber layer. The secondary rigid support layers 81 and the secondary elastic buffer layers 82 are fixed into a whole by means of vulcanization.

Specifically, three secondary rigid support layers 81 are provided, and the three secondary rigid support layers 81 are arranged in parallel. Two secondary elastic buffer layers 82 are provided and respectively arranged between adjacent secondary rigid support layers 81. A cross-sectional area of the secondary elastic buffer layer 82 gradually decreases along a direction from the secondary rigid support layer 81 on the outer side to the secondary rigid support layer 81 on the inner side. From the figures, the secondary elastic buffer layer 82 is bowl-shaped, and the combination of the two secondary elastic buffer layers 82 forms an hourglass-shaped structure.

The secondary connecting hole 83 is formed in the secondary rigid support layer 81 at the bottom and extends into the secondary elastic buffer layer 82 below, so that the side beam connecting pin 24 can be inserted.

Those skilled in the art can also make appropriate improvements to the above-mentioned secondary suspension device 8, so that the secondary suspension device 8 can be applied to different types of bogies.

The implementation of the force transmission device 4 is described in detail as follows.

The force transmission device 4 is connected between the two connection bases 3, and the top end of the force transmission device 4 is also connected with the vehicle body to provide a traction force or braking force for the vehicle body.

This embodiment provides an implementation of the force transmission device 4 as follows.

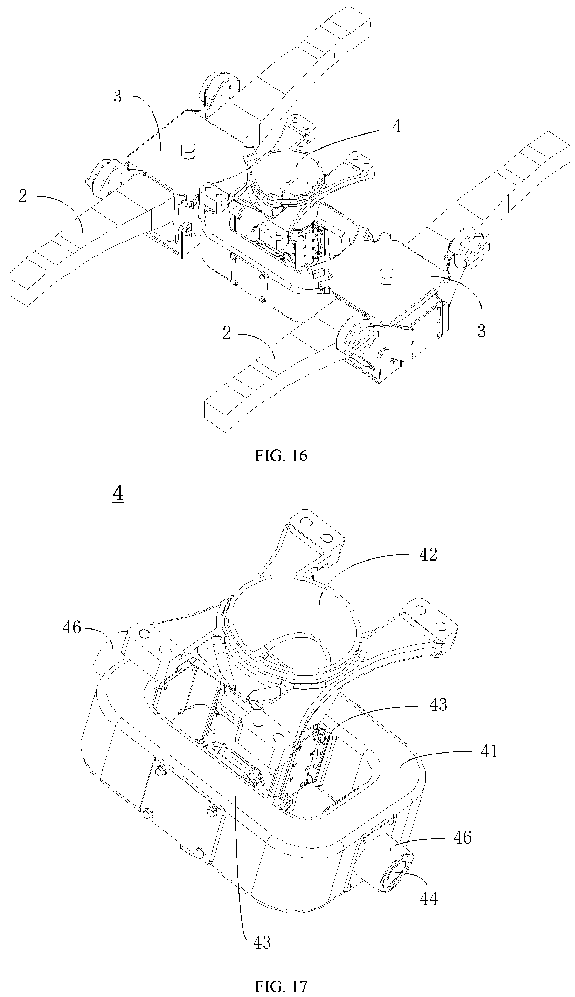

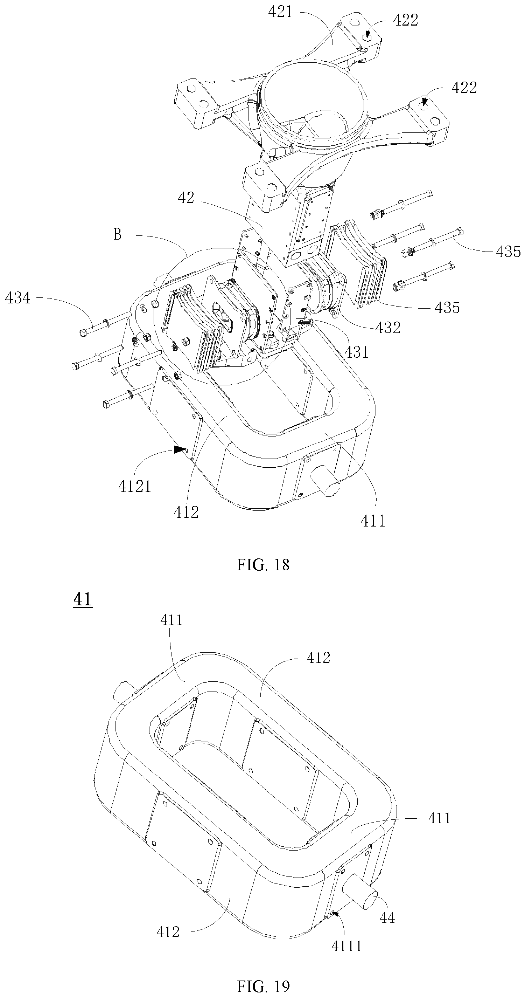

FIG. 16 is a schematic structural diagram of an assembly of the force transmission device with the connection base and the side beam according to the second embodiment of this application; FIG. 17 is a schematic structural diagram of the force transmission device according to the second embodiment of this application; and FIG. 18 is an exploded view of the force transmission device according to the second embodiment of this application. As shown in FIGS. 16 to 18, the force transmission device includes: a traction beam 41, a traction pin 42 and traction buffers 43. Two ends of the traction beam 41 are respectively connected with the connection bases 3 at the corresponding ends. A top end of the traction pin 42 is connected with the vehicle body, a bottom end of the traction pin 42 is in an assembled relationship with the traction beam 41, and the traction buffers 43 are arranged between the traction beam 41 and the traction pin 42.

The traction pin 42 can refer to the structure commonly used in the prior art. The top end of the traction pin 42 is connected to the vehicle body, and the bottom end of the traction pin 42 is fitted with the traction beam 41, so that the longitudinal force of the bogie can be transmitted to the traction pin 42 through the traction beam 41, and then to the vehicle body.

In this embodiment, the top end of the traction pin 42 is provided with vehicle body mounting portions 421, and the vehicle body mounting portion 421 is provided with vehicle body connecting holes 422. The connection with the bottom of the vehicle body is achieved by the vehicle body connecting holes 422 each fitted with a bolt. The top end of the traction pin 42 extends in the longitudinal direction to form four vehicle body mounting portions 421, and each vehicle body mounting portion 421 is provided with two vehicle body connecting holes 422.

FIG. 19 is a schematic structural diagram of the traction beam in the force transmission device according to the second embodiment of this application. As shown in FIGS. 17 to 19, the traction beam 41 is of a frame-shaped structure. Frame edges parallel to the longitudinal direction are referred to as longitudinal frames 411, and frame edges parallel to the lateral direction are referred to as lateral frames 412. There is a smooth rounded transition between the longitudinal frame 411 and the lateral frame 412, so that the horizontal section of the traction beam 41 becomes a rounded rectangle. The traction beam 41 is of a hollow box-shaped structure.

The bottom end of the traction pin 42 is located in an area surrounded by the traction beam 41, and the traction buffers 43 are also arranged in this area and located between the traction pin 42 and an inner wall of the traction beam 41. Specifically, two traction buffers 43 are provided and respectively arranged between the two longitudinal sides of the traction pin 42 and the corresponding lateral frames 412. The traction buffer 43 can buffer the longitudinal force between the traction beam 41 and the traction pin 42 to avoid direct rigid impact and friction between the traction beam 41 and the traction pin 42.

The traction buffer 43 can adopt a structure commonly used in the prior art, or can also adopt the structure shown in FIG. 18. As shown in FIG. 18, the traction buffer 43 includes: a surrounding baffle plate 431, a traction buffer assembly 432, and traction buffer connecting bolts 434.

The surrounding baffle plate 431 is arranged around the outer side of the lower part of the traction pin 42, and there is no gap between the surrounding baffle plate 431 and the traction pin 42. The surrounding baffle plate 431 is composed of four flat baffle plates, and the surrounding baffle plate 431 can be matched with the bottom of the traction pin 42 in shape; that is, the surrounding baffle plate 431 is of a barrel structure with a rectangular horizontal section.

The traction buffer assembly 432 is arranged on a longitudinal end surface of the surrounding baffle plate 431; that is, the traction buffer assembly 432 is located between the surrounding baffle plate 431 and the lateral frame 412. The traction buffer assembly 432 and the lateral frame 412 are fixed together with the traction buffer connecting bolts 434. Specifically, a frame edge connecting hole 4121 is formed in the lateral frame 412, and the centerline of the frame edge connecting hole 4121 extends along the longitudinal direction. Bolt holes for the traction buffer connecting bolts 434 are correspondingly formed in the traction buffer assembly 432, and the traction buffer connecting bolts 434 pass through the frame edge connecting holes 4121 and the bolt holes in the traction buffer assembly 432 from the outside of the lateral frame 412 in sequence, and are then connected to corresponding nuts to fix the traction buffer assembly 432 on the lateral frame 412.

The traction buffer assembly 432 is in direct contact with the surrounding baffle plate 431 and is located between the surrounding baffle plate 431 and the lateral frame 412 to buffer the longitudinal force therebetween.

Further, the traction buffer 43 further includes: traction buffer adjusting gaskets 435 arranged between the traction buffer assembly 432 and the lateral frames 412. There may be one, two, three or more traction buffer adjusting gaskets 435 for adjusting the distance between the traction buffer assembly 432 and the lateral frame 412. Due to the difference between the actual size and the design size of each part, a number of traction buffer adjusting gaskets 435 are arranged between the lateral frame 412 and the traction buffer assembly 432, so that the distance between the traction buffer 43 and the traction pin 42 meets the design requirements. The number of the traction buffer adjusting gaskets 435 can be set according to the distance between the traction buffer assembly 432 and the lateral frame 412.

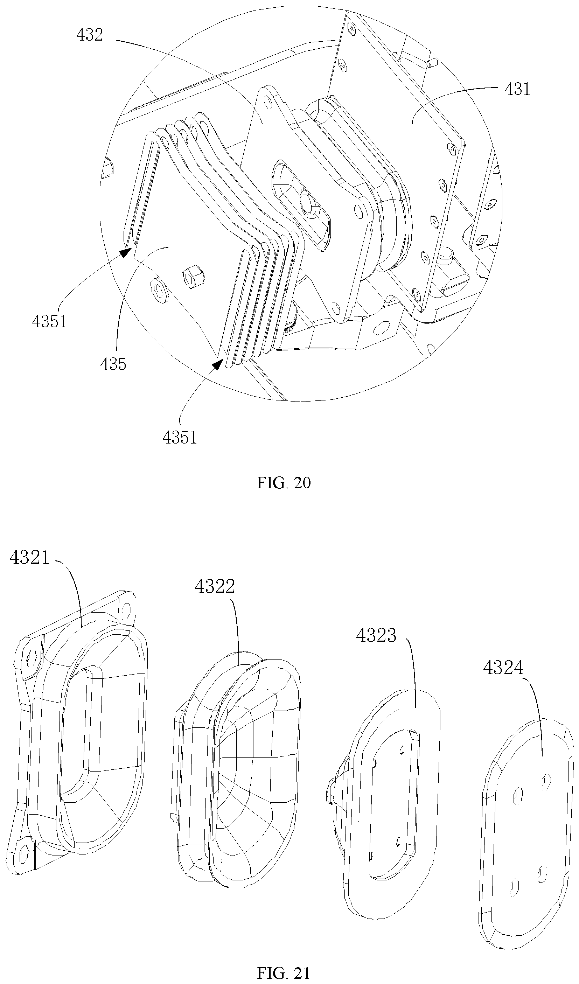

The traction buffer adjusting gasket 435 may be pre-connected between the traction buffer assembly 432 and the lateral frame 412, or the traction buffer adjusting gasket 435 may be assembled after the entire traction buffer 43 is assembled. FIG. 20 is an enlarged view of area B in FIG. 18. As shown in FIG. 20, in this embodiment, the traction buffer adjusting gasket 435 is provided with gasket openings 4351 that can accommodate the traction buffer connecting bolts 434. Two gasket openings 4351 are provided and symmetrically distributed at two ends of the traction buffer adjusting gasket 435. During application, the gasket openings 4351 are inserted downward between the lateral frame 412 and the traction buffer assembly 432, and the traction buffer connecting bolts 434 are accommodated in the gasket openings 4351 to limit the lateral movement of the traction buffer adjusting gaskets 435.

The traction buffer assembly 432 functions to buffer the longitudinal force between the surrounding baffle plate 431 and the lateral frame 412, and its elastic structure can be made of a material with certain elasticity. This embodiment provides an implementation of the traction buffer assembly 432 as follows. FIG. 21 is an exploded view of the traction buffer assembly in the force transmission device according to the second embodiment of this application. As shown in FIG. 21, the traction buffer assembly 432 includes: a first metal connector 4321, a rubber connector 4322, a second metal connector 4323, and a third metal connector 4324 arranged in sequence along the longitudinal direction.

The first metal connector 4321 is provided with bolt holes and can be connected to the lateral frame 412 through the traction buffer connecting bolts 434. The second metal connector 4323 and the third metal connector 4324 are correspondingly provided with bolt holes and can be fixed together by bolts and come into contact with the surrounding baffle plate 431. The rubber connector 4322 is located between the first metal connector 4321 and the second metal connector 4323. The rubber connector 4322 is fixed to the first metal connector 4321 and the second metal connector 4323 by means of vulcanization.

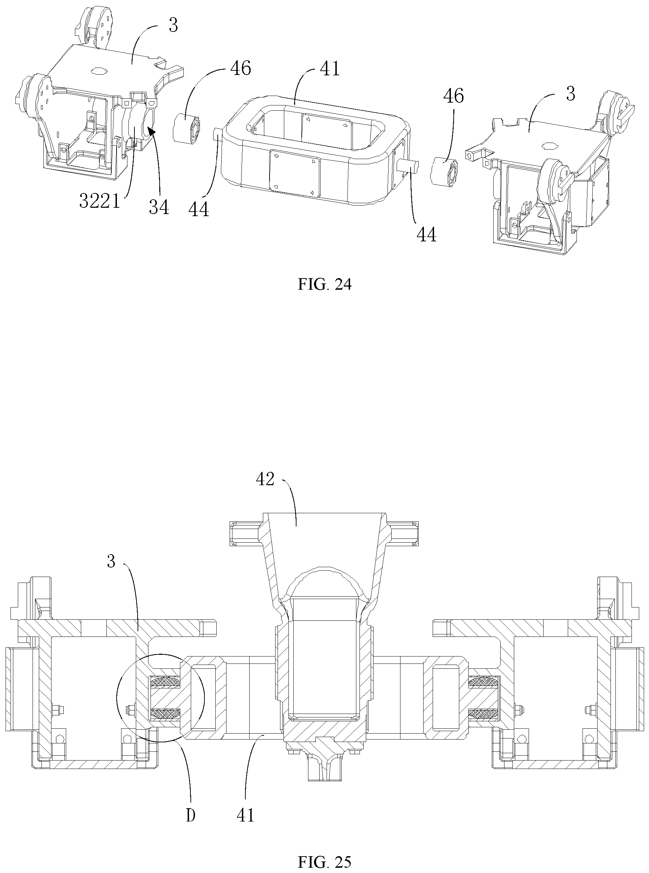

The connection between the force transmission device 4 and the connection base 3 can be implemented as follows. As shown in FIGS. 19 and 24, a traction connecting pin 44 is used to connect the traction beam 41 and the connection base 3. Specifically, one end of the traction connecting pin 44 is connected to the longitudinal frame 411 of the traction beam 41, for example, to the middle part of the longitudinal frame 411. The other end of the traction connecting pin 44 is inserted into a traction beam mounting hole 34 (as shown in FIG. 3) on the inner side of the connection base 3. The longitudinal force is transferred between the connection base 3 and the force transmission device 4 by a longitudinal acting force between the traction connecting pin 44 and the traction beam mounting hole 34.

Further, the longitudinal frame 411 and the connection base 3 can also be connected together by a traction connecting bolt 45, so that the relative position between the longitudinal frame 411 and the connection base 3 can be kept fixed.

Specifically, as shown in FIG. 3, an inwardly protruding traction beam connecting sleeve 3221 is arranged on the second base body inner side plate 322 of the connection base 3, and provided therein with the traction beam mounting hole 34 having a centerline extending in the lateral direction. The traction connecting bolt 45 is fixed into the traction beam mounting hole 34.

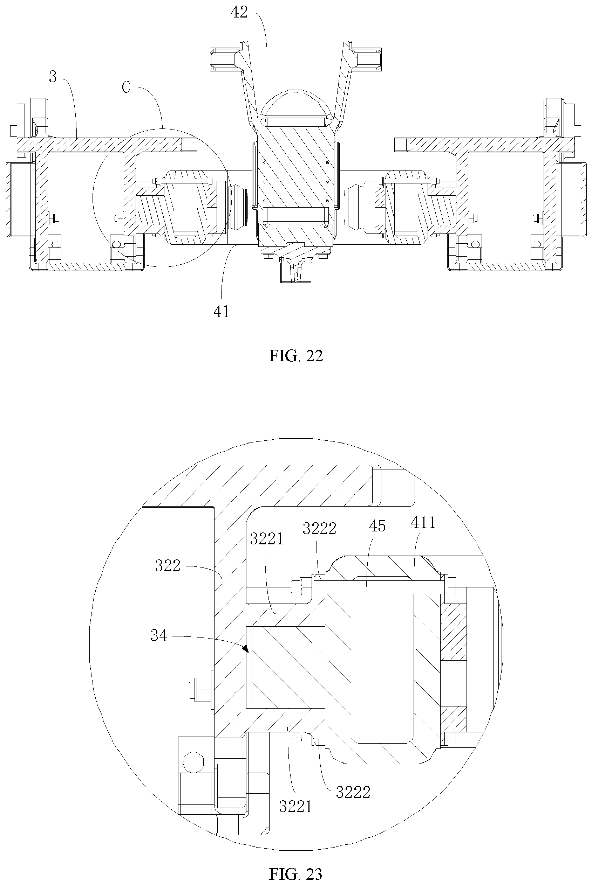

As shown in FIG. 19, a traction bolt connecting hole 4111 is formed at the middle part of the longitudinal frame 411 of the traction beam 41. Correspondingly, as shown in FIGS. 22 and 23, an end of the traction beam connecting sleeve 3221 extends outward to form a connecting flange 3222, and a bolt hole is formed in the connecting flange 3222 (the connecting flange is not shown in FIG. 3). The traction connecting bolt 45 passes through the longitudinal frame 411 and the connecting flange 3222 in sequence and is then fitted with a corresponding traction connecting nut to achieve fixing.

The longitudinal frame 411 on one side is connected by four traction connecting bolts 45, and the connection is rigid connection; that is, the relative position between the connection base 3 and the force transmission device 4 cannot be changed.

This embodiment also provides another connection method for implement flexible connection between the connection base 3 and the force transmission device 4, thereby broadening the adaptability of the bogie to various road surfaces. When a small vertical bulge or depression occurs on a track, the wheel on the corresponding side travels on the bulge or depression, thus driving the connection base 3 to bump up and down slightly. Due to the flexible connection between the connection base 3 and the force transmission device 4, the slight movement of the connection base 3 will not be transmitted to the force transmission device 4, so as to ensure that the vertical height of the force transmission device 4 remains basically unchanged, thereby improving the stability of the vehicle body and the riding comfort.

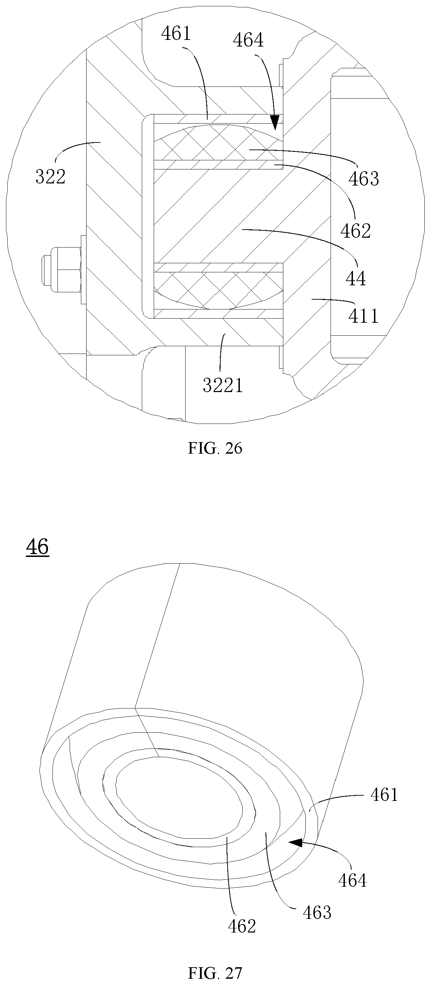

FIG. 24 is an exploded view of another assembly form of the force transmission device and the connection base according to the second embodiment of this application; FIG. 25 is a cross-sectional view of the other assembly form of the force transmission device and the connection base according to the second embodiment of this application; and FIG. 26 is an enlarged view of area D in FIG. 25. As shown in FIGS. 27 and 24 to 26, a traction buffer connecting sleeve 46 is fitted over the traction connecting pin 44 and pressed between the traction connecting pin 44 and the inner wall of the traction beam mounting hole 34 in the connection base 3. In this way, the longitudinal force can be transmitted between the connection base 3 and the force transmission device 4 and the lateral relative position between the connection base 3 and the force transmission device 4 can also be fixed. In addition, the traction buffer connecting sleeve 46 itself can elastically deform in a direction of 360°, so that the flexible connection between the connection base 3 and the force transmission device 4 is achieved and the connection base 3 and the force transmission device 4 can rotate relative to each other at a certain angle.

FIG. 27 is a schematic structural diagram of the traction buffer connecting sleeve in the force transmission device according to the second embodiment of this application. As shown in FIGS. 26 and 27, the traction buffer connecting sleeve 46 may specifically include: an outer traction buffer sleeve 461, an inner traction buffer sleeve 462 and a middle traction buffer sleeve 463. The middle traction buffer sleeve 463 is fixedly connected between the outer traction buffer sleeve 461 and the inner traction buffer sleeve 462. The outer traction buffer sleeve 461 is configured for interference fit with the traction beam mounting hole 34 and the inner traction buffer sleeve 462 is configured for interference fit with the traction connecting pin 44, so that the entire traction buffer connecting sleeve 46 is fixed between the traction beam mounting hole 34 and the traction connecting pin 44.

The above-mentioned middle traction buffer sleeve 463 may be made of a material capable of elastic deformation. In this embodiment, the middle traction buffer sleeve 463 is configured as a rubber sleeve, and the outer traction buffer sleeve 461 and the inner traction buffer sleeve 462 are both configured as metal sleeves. The middle traction buffer sleeve 463 is fixed to the outer traction buffer sleeve 461 and the inner traction buffer sleeve 462 by means of vulcanization. When the wheel 12 on one side travels on a road with bulges or depressions, the vertical height of the centerline of the wheel rises, thus driving the centers of gravity of the axle 11, the axle box 13 on the corresponding side of the wheel, and the connection base 3 to rise. The center of gravity of the connection base 3 is raised, resulting in a certain angle between the centerline of the traction beam mounting hole 34 and the centerline of the traction connecting pin 44. Because the middle traction buffer sleeve 463 can be elastically deformed, its upper part is compressed, its lower part is stretched, and the deformation of the traction connecting pin 44 is reduced and transmitted to the force transmission device 4, so that the center of gravity of the force transmission device 4 remains unchanged.

Further, an outer peripheral surface of the middle traction buffer sleeve 463 is configured as a spherical surface, so that its middle position along the centerline direction is fixedly connected with the outer traction buffer sleeve 461, and a certain buffer gap 464 is formed between its two ends along the centerline direction and the outer traction buffer sleeve 461. This buffer gap 464 can function as a deformation space for the middle traction buffer sleeve 463, thereby increasing the deformation of the middle traction buffer sleeve 463 and further improving the buffering effect.

The above-mentioned force transmission device 4 is configured to transmit the longitudinal force between the connection base 3 and the vehicle body, and the longitudinal force between the connection base 3 and the axle box 13 can be transmitted through the side beam 2. If the side beam 2 is configured as a rigid beam, a better force transmission effect can be achieved. If the side beam 2 is made of a carbon fiber, a glass fiber, or the like, a connection structure is required to be arranged between the connection base 3 and the axle box 13 to transmit the longitudinal force.

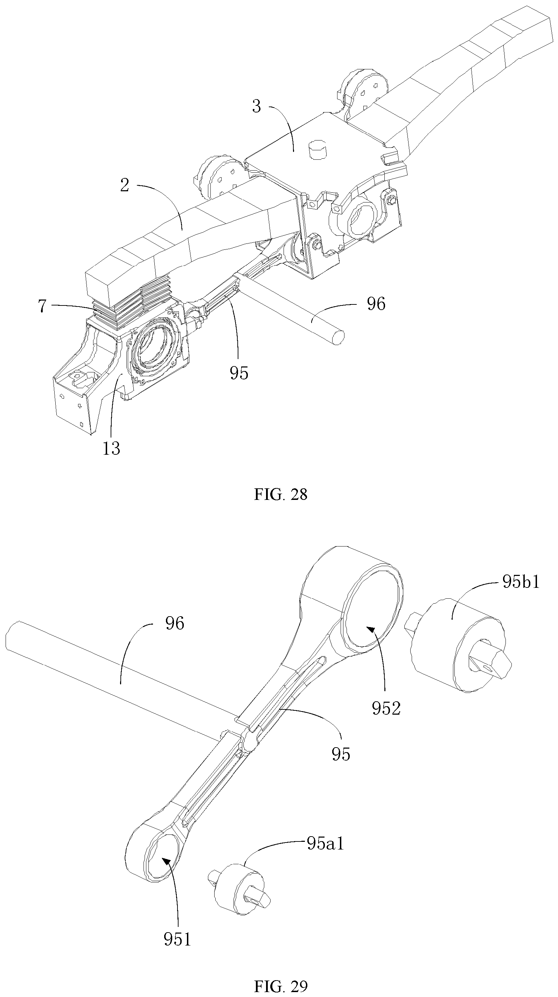

FIG. 28 is a schematic structural diagram of an arrangement of a simplex pull rod between the connection base and the axle box according to the second embodiment of this application. As shown in FIG. 28, the simplex pull rod 95 is arranged between the connection base 3 and the axle box 13 on the same side in the lateral direction to transmit the longitudinal force. The simplex pull rod 95 extends in the longitudinal direction and has one end connected to the connection base 3 and the other end connected to the axle box 13.

FIG. 29 is an exploded view of an assembly of the simplex pull rod with a first pull rod connecting assembly and a second pull rod connecting assembly according to the second embodiment of this application. As shown in FIG. 29, the first pull rod connecting assembly can be configured to connect the simplex pull rod 95 and the axle box 13, and the second pull rod connecting assembly can be configured to connect the simplex pull rod 95 and the connection base 3.

Specifically, first, an implementation of the first pull rod connecting assembly is described in detail as follows.

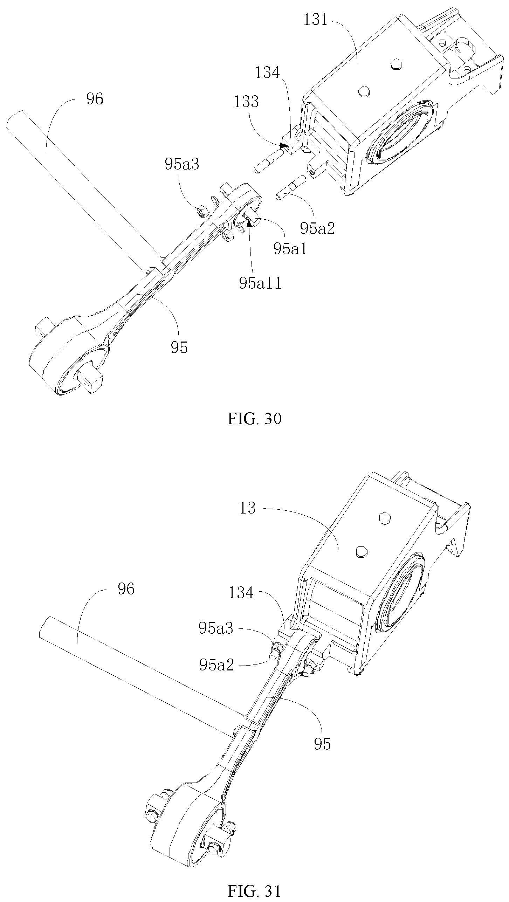

FIG. 30 is an exploded view of an assembly of the simplex pull rod and the axle box according to the second embodiment of this application; and FIG. 31 is a schematic structural diagram of the assembly of the simplex pull rod and the axle box according to the second embodiment of this application. As shown in FIGS. 29 to 31, one end of the simplex pull rod 95 is provided with a first pull rod hole 951, and a centerline of the first pull rod hole 951 extends in the lateral direction. Correspondingly, the axle box 13 is provided with pull rod threaded holes 133.

The above-mentioned first pull rod connecting assembly includes: a first mandrel 95a1 and pull rod connecting studs 95a2. The first mandrel 95a1 is inserted into the first pull rod hole 951. Two ends of the first mandrel 95a1 are exposed out of the first pull rod hole 951, and first mandrel bolt holes 95a11 are formed at the two ends. One end of the pull rod connecting stud 95a2 is fixed in the pull rod threaded hole 133 in the axle box 3 by threaded fitting, and the other end of the pull rod connecting stud 95a2 passes through the first mandrel bolt hole 95a11 and is then connected to a first pull rod connecting nut 95a3. A gasket can be arranged between the pull rod connecting stud 95a2 and the first pull rod connecting nut 95a3 as required.

Two pull rod connecting protrusions 134 are arranged on a box body 131 of the axle box 13, and each pull rod connecting protrusion 134 is provided with the pull rod threaded hole 133 having a centerline extending in the longitudinal direction.

In addition to the above implementation of this embodiment, other implementations may also be used to connect the simplex pull rod 95 and the axle box 13, which is not limited in this embodiment.

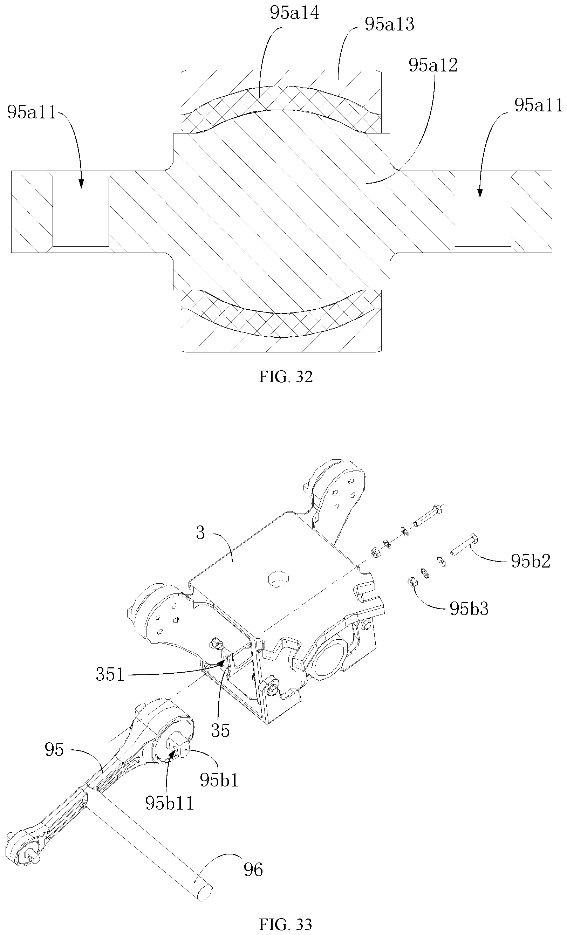

FIG. 32 is a cross-sectional view of a first mandrel according to the second embodiment of this application. As shown in FIG. 32, the first mandrel 95a1 may specifically include: a first mandrel body 95a12, a first outer mandrel sleeve 95a13 and a first mandrel buffer sleeve 95a14. The first mandrel body 95a12 has a cylindrical middle part and two rectangular parallelepiped ends, and the first mandrel bolt holes 95a11 are formed in the rectangular parallelepiped parts. The first outer mandrel sleeve 95a13 is fitted over the first mandrel body 95a12 and is in interference fit with the inner wall of the first pull rod hole 951.

The first mandrel buffer sleeve 95a14 is arranged between the first mandrel body 95a12 and the first outer mandrel sleeve 95a13. The first mandrel buffer sleeve 95a14 can be made of an elastic material. In this embodiment, the first mandrel buffer sleeve 95a14 is configured as a rubber sleeve, and the first mandrel body 95a12 and the first outer mandrel sleeve 95a13 are both made of a metal. The first mandrel buffer sleeve 95a14 is fixed to the first mandrel body 95a12 and the first outer mandrel sleeve 95a13 by means of vulcanization.

Since the first mandrel buffer sleeve 95a14 itself can deform within a range of 360°, when the wheel travels in an uneven area, the vertical heights of the wheel 12 and the axle box 13 are increased. Through the deformation of the first mandrel buffer sleeve 95a14, a force applied by the axle box 13 to the simplex pull rod 95 due to the height change can be offset and the vertical height of the simplex pull rod 95 is not changed; as a result, the vertical heights of the connection base 3 and the vehicle body will not be influenced and the riding comfort can be improved.

Second, an implementation of the second pull rod connecting assembly is described in detail as follows.

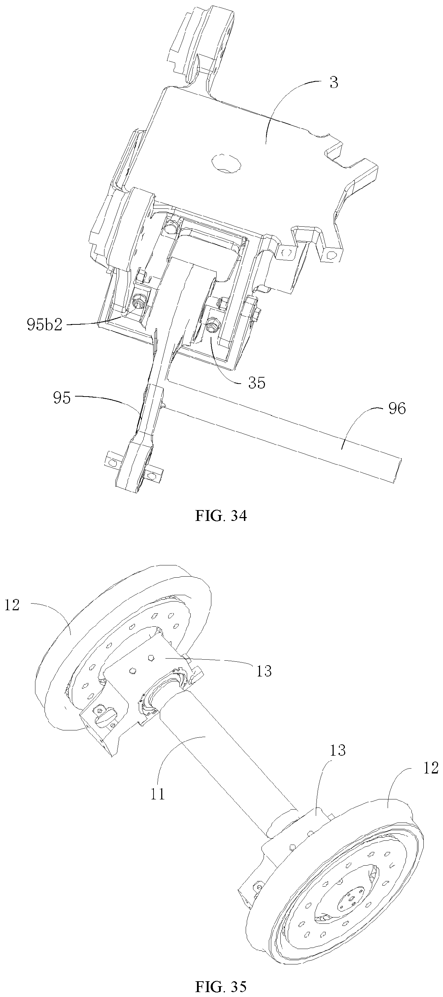

FIG. 33 is an exploded view of an assembly of the simplex pull rod and the connection base according to the second embodiment of this application; and FIG. 34 is a schematic structural diagram of the assembly of the simplex pull rod and the connection base according to the second embodiment of this application. As shown in FIGS. 29, 33 and 34, the other end of the simplex pull rod 95 is provided with a second pull rod hole 952, and a centerline of the second pull rod hole 952 extends in the lateral direction. Correspondingly, pull rod connecting holes 351 are formed in the connection base 3 to connect the simplex pull rod 95.

The above-mentioned second pull rod connecting assembly includes: a second mandrel 95b1 and pull rod connecting bolts 95b2. The second mandrel 95b1 is inserted into the second pull rod hole 952. Two ends of the second mandrel 95b1 are exposed out of the second pull rod hole 952, and second mandrel bolt holes 95b11 are formed at the two ends. The pull rod connecting bolt 95b2 passes through the pull rod connecting hole 351 in the connection base 3 and the second mandrel bolt hole 95b11 in sequence and is then connected to a second pull rod connecting nut 95b3. A gasket can be arranged between the pull rod connecting bolt 95b2 and the second pull rod connecting nut 95b3 as required.

As shown in FIGS. 6 and 33, pull rod connecting columns 35 are arranged at the bottom of the connection base 3, and a pull rod connecting hole 351 having a centerline extending in the longitudinal direction is formed in the pull rod connecting column 35.

In addition to the above implementation of this embodiment, other implementations may also be used to connect the simplex pull rod 95 and the connection base 3, which is not limited in this embodiment.

The structure of the second mandrel 95b1 may refer to the structure of the first mandrel 95a1, and the second mandrel 95b1 may be of the same structure as the first mandrel 95a1. Specifically, the second mandrel 95b 1 may include: a second mandrel body, a second outer mandrel sleeve, and a second mandrel buffer sleeve. The second mandrel body has a cylindrical middle part and two rectangular parallelepiped ends, and the second mandrel bolt holes 95b11 are formed in the rectangular parallelepiped parts. The second outer mandrel sleeve is fitted over the second mandrel body and is in interference fit with the inner wall of the second pull rod hole 952.

The second mandrel buffer sleeve is arranged between the second mandrel body and the second outer mandrel sleeve. The second mandrel buffer sleeve can be made of an elastic material. In this embodiment, the second mandrel buffer sleeve is configured as a rubber sleeve, and the second mandrel body and the second outer mandrel sleeve are both made of a metal. The second mandrel buffer sleeve is fixed to the second mandrel body and the second outer mandrel sleeve by means of vulcanization.

The following is a detailed description of the components related to the wheel set.

FIG. 35 is a schematic structural diagram of the wheel set and the axle box according to the second embodiment of this application. As shown in FIG. 35, the wheel set includes an axle 11 and wheels 12. Two wheels 12 are provided and symmetrically arranged on the axle 11. Two axle boxes 13 are provided and symmetrically arranged on the axle 11 and located at inner sides of the wheels 12.

On the basis of the above technical solution, this embodiment provides a split wheel as follows.

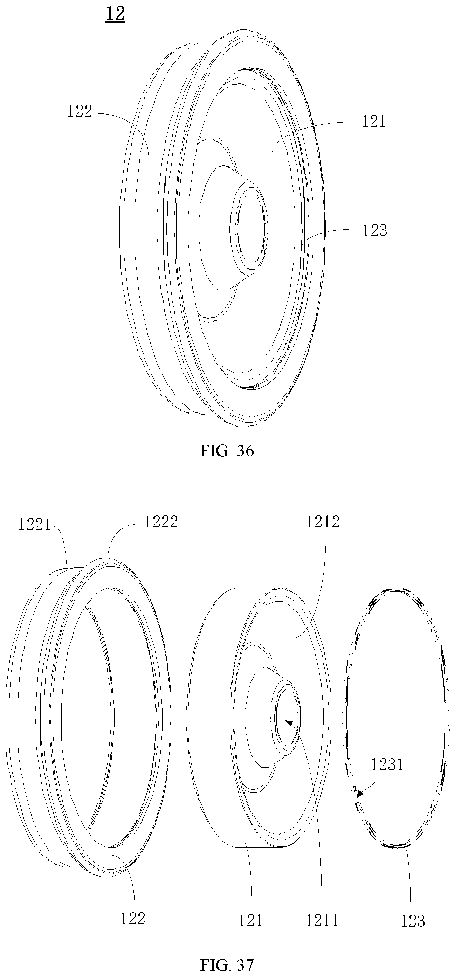

FIG. 36 is a schematic structural diagram of the wheel according to the second embodiment of this application; and FIG. 37 is an exploded view of the wheel according to the second embodiment of this application. As shown in FIGS. 36 and 37, the wheel 12 includes a wheel boss 121, a wheel rim 122, and a wheel ring 123. An axle hole 1211 is formed at the center of the wheel boss 121, and the axle 11 can be inserted into the axle hole 1211 and is in interference fit with the axle hole 1211. A part between the axle hole 1211 and an outer edge of the wheel boss 121 is configured as a spoke plate 1212, and a surface of the spoke plate 1212 may be configured as a plane or a curved surface.

The wheel rim 122 is fitted over an outer peripheral surface of the wheel boss 121 and in interference fit with the wheel boss 121, so that the axle 11, the wheel boss 121 and the wheel rim 122 rotate synchronously. The wheel ring 123 is configured to connect the wheel boss 121 and the wheel rim 122.

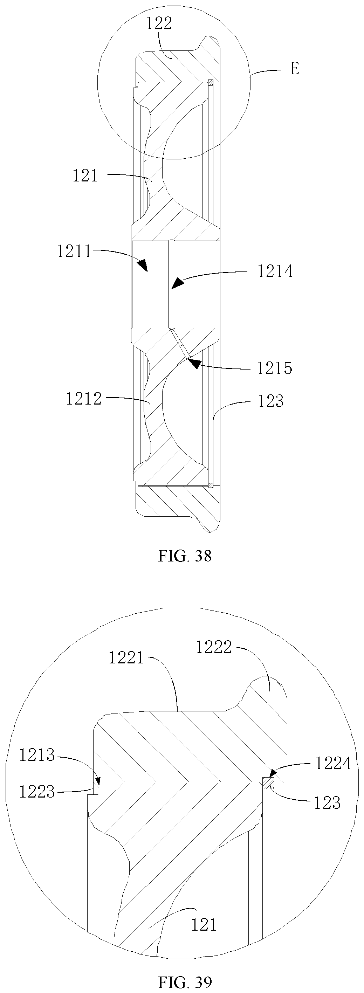

FIG. 38 is a cross-sectional view of the wheel according to the second embodiment of this application; and FIG. 39 is an enlarged view of area E in FIG. 38. The specific structure may refer to FIGS. 36 to 39, a tread 1221 is arranged at an outer peripheral surface of the wheel rim 122, and one end of the tread 1221 along the axial direction protrudes to form a wheel flange 1222. The tread 1221 is configured to come into contact with a railway track, and the wheel flange 1222 is configured to abut against an inner side of the track, so as to limit the wheel 12 on the track.

A limiting flange 1223 is arranged on an inner peripheral surface of one end of the wheel rim 122 in the axial direction, and the limiting flange 1223 protrudes from the outer peripheral surface to the inner peripheral surface. The limiting flange 1223 is located at one end away from the wheel flange 1222. Correspondingly, an axial end of the wheel boss 121 is provided with a stepped surface 1213 to be lapped on the limiting flange 1223. During the assembly process, the wheel boss 121 is mounted in the wheel rim 122 leftwards until the stepped surface 1213 comes into contact with the limiting flange 1223, and then, the assembly of the wheel boss 121 is completed. The limiting flange 1223 can limit the wheel boss 121 from coming off the wheel rim 122 from the left side.

The wheel ring 123 is configured to fix the wheel boss 121 in the wheel rim 122. Specifically, a wheel ring assembling groove 1224 is formed in an inner peripheral surface of the other end of the wheel rim 122 in the axial direction, and the wheel ring 123 can be embedded in the wheel ring assembling groove 1224. The wheel ring 123 is annular and has a thickness greater than a depth of the wheel ring assembling groove 1224, and the wheel ring 123 has an outer part embedded in the wheel ring assembling groove 1224 and an inner part located outside the wheel ring assembling groove 1224. The part located outside the wheel ring assembling groove 1224 extends to the end surface of the wheel boss 121 and presses the wheel boss 121 in the wheel rim 122 tightly, thus preventing the wheel boss 121 from coming off to the right.

The above implementation can be carried out to limit the wheel boss 121 within the wheel rim 122, but it is not the only implementation. Those skilled in the art can also modify the above solution to obtain other implementations which can also achieve the effect of limiting the position of the wheel boss 121.

The above-mentioned wheel 12 is of a split structure and consists of the wheel boss 121, the wheel rim 122 and the wheel ring 123. When the tread of the wheel rim 122 is seriously worn, only the wheel rim 122 needs to be replaced, and the wheel boss 121 does not need to be replaced. The wheel boss 121 can be reused, which reduces the waste of materials and reduces the operating cost of the rail vehicle. The structure of the wheel 12 is relatively simple and can be produced easily.

A wheel ring notch 1231 can be formed in the wheel ring 123, so that the wheel ring can be deformed for convenient assembly. The cross section of the wheel ring 123 may be rectangular, trapezoidal, or the like. The wheel ring assembling groove 1224 matches the wheel ring 123 in shape.

The above-mentioned wheel boss 121 can be made of a light-weight high-strength material, such as an aluminum-based graphene material, an aluminum alloy, a magnesium alloy, or the like. Since the aluminum-based graphene material, the aluminum alloy, the magnesium alloy and other light-weight high-strength materials have the characteristics of high strength and low density, in the case where the above-mentioned wheel boss 121 is made of the aluminum-based graphene material, the aluminum alloy, the magnesium alloy or other light-weight high-strength materials, on the condition that the wheel 12 meets the strength requirement, the weight of the wheel 12 can be greatly reduced, and the overall mass of the wheel set, the bogie and the rail vehicle can be further reduced, which is favorable for energy saving and consumption reduction of the rail vehicle. In addition, it can also reduce the unsprung mass of the bogie, the acting force between the wheel and the track, the wear of the wheel and the track, and the noise.

In addition, as shown in FIG. 38, an oil groove 1214 is formed in an axle hole wall of the wheel boss 121, and an oil filler hole 1215 in communication with the oil groove 1214 is formed in the wheel boss 121. The oil groove 1214 may be configured as an annular oil groove, and the cross section of the oil groove 1214 may be semicircular.

When the wheel boss 121 is disassembled from the axle 11, lubricating oil can be filled into the oil groove 1214 through the oil filler hole 1215, so that the lubricating oil can reach a position between the axle 11 and the wheel boss 121 through the oil filler hole 1215 and the oil groove 1214 to form an oil film between the axle 11 and the wheel boss 121. In this way, the surface of the axle 11 or the wheel boss 121 is prevented from being damaged during the axle withdrawal process, thereby prolonging the service life of the axle 11 and the wheel boss 121 and reducing the use cost. Moreover, the wheel boss 121 can be disassembled from the axle 11 without using a large force, which facilitates the operation.

The above-mentioned bogie can function as a non-powered bogie, and if a driving device is provided therein, the bogie can function as a powered bogie. This embodiment provides an implementation of the driving device as follows.

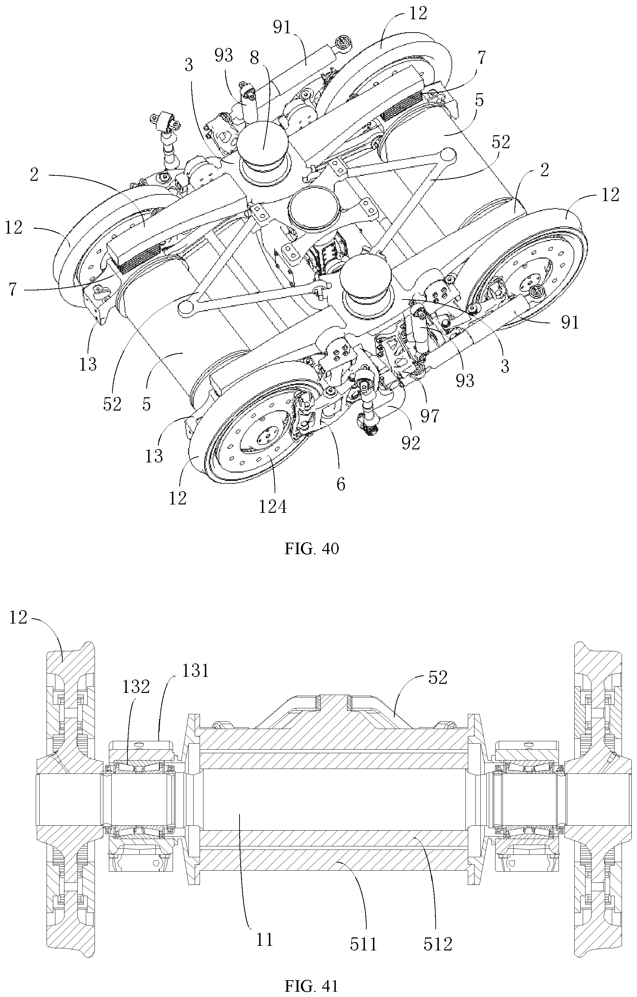

FIG. 40 is a schematic structural diagram of the powered bogie according to the second embodiment of this application; and FIG. 41 is a cross-sectional view of the wheel set, the axle boxes and the driving devices according to the second embodiment of this application. As shown in FIGS. 40 and 41, the driving device 5 includes: a direct drive motor 51 and balance rods 52. The direct drive motor 51 is arranged on the axle 11 and located between the two axle boxes 13.

The direct drive motor 51 includes a motor housing 511, a rotor 512, and a stator. The motor housing 511 is connected to the connection base 3 through the balance rod 52. The stator is arranged on the motor housing 511 and is fixed. The rotor 512 is in interference fit with the axle 11 to rotate synchronously with the axle 11.

The direct drive motor 51 may be of a structure commonly used in the prior art. Bearings may be arranged between the motor housing 511 and the axle 11 to support the motor housing 511 and ensure that the rotor 512 can rotate smoothly. In this embodiment, since the axle box 13 is arranged between the wheel 12 and the direct drive motor 51, the motor housing 511 can be connected to the box body 131 of the axle box 13, so that the motor housing 511 and the box body 131 share the bearing 132.

One end of the balance rod 52 is connected to the motor housing 511, and the other end of the balance rod 52 is connected to the connection base 3. The connection with the motor housing 511 may be implemented by means of bolting, welding, riveting, or the like. The connection with the connection base 3 can be implemented as follows.

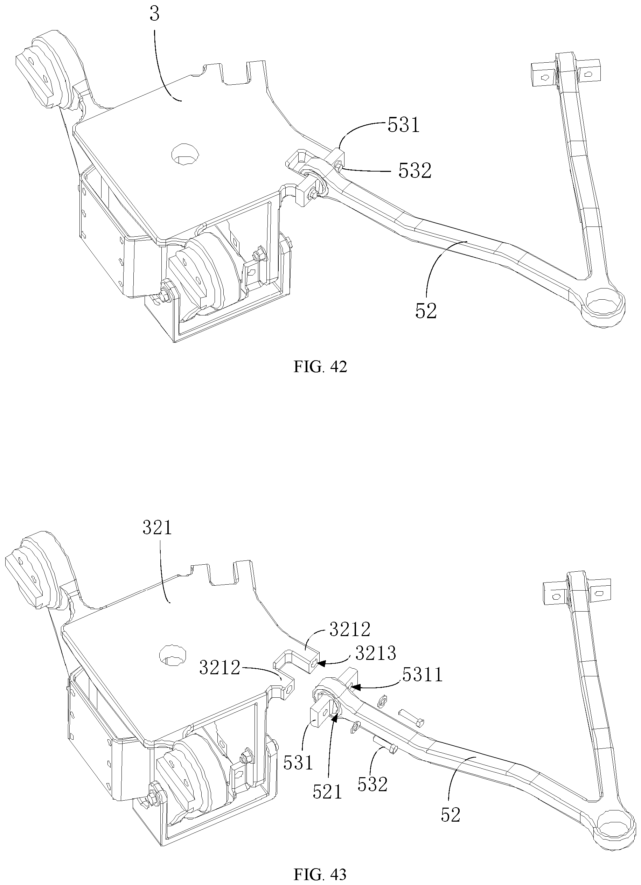

FIG. 42 is a schematic structural diagram of an assembly of the balance rod and the connection base according to the second embodiment of this application; and FIG. 43 is an exploded view of the assembly of the balance rod and the connection base according to the second embodiment of this application. As shown in FIGS. 42 and 43, the balance rod 52 and the connection base 3 are connected together by a balance rod connector. The balance rod connector includes: a balance rod mandrel 531 and balance rod connecting bolts 532.

Specifically, the balance rod 51 is of an approximate "V"-shaped structure and has a top connected to the motor housing 511 and two ends connected to the corresponding connection bases 3. A balance rod connecting hole 521 is formed at the end of the balance rod 51, and the balance rod mandrel 531 can pass through the balance rod connecting hole 521. The structure of the balance rod mandrel 531 may refer to the structure of the first mandrel 95a1 shown in FIG. 32. A middle part of the balance rod mandrel 531 is inserted in the balance rod connecting hole 521, and two ends of the balance rod mandrel 531 are exposed out of the balance rod connecting hole 521 and each provided with a balance rod mandrel connecting hole 5311.

Correspondingly, balance rod connecting openings are formed in the connection base 3, specifically in the base body top plate 321. Balance rod connecting protrusions 3212 are arranged at inner top corners of the base body top plate 321, and a balance rod threaded hole 3213 is formed in an end surface of the balance rod connecting protrusion 3212. After passing through the balance rod mandrel connecting hole 5311, the balance rod connecting bolt 532 is fixed in the balance rod threaded hole 3213 by threaded fitting.

Two balance rod connecting protrusions 3212 connected to one end of the balance rod 52 are provided, and a certain gap exits between the two balance rod connecting protrusions 3212 to form a balance rod avoidance groove. The end of the balance rod 52 can be accommodated in the balance rod avoidance groove.

Using the above-mentioned balance rod mandrel 531 to connect the balance rod 52 and the connection base 3 can offset a starting torque of the motor.

On the basis of the above technical solution, a braking device 6 is arranged in the bogie to carry out braking in a braking state. As shown in FIGS. 1 and 40, this embodiment adopts disc braking. That is, a brake disc 124 is arranged on a disc surface of the wheel 12 (i.e., a spoke plate surface, also known as, the outer surface of the above-mentioned wheel boss 121), and the braking device 6 carries out braking by clamping the brake disc 124. For the wheel 12 provided above, the brake disc 124 can be connected with the wheel boss 121 by bolts.

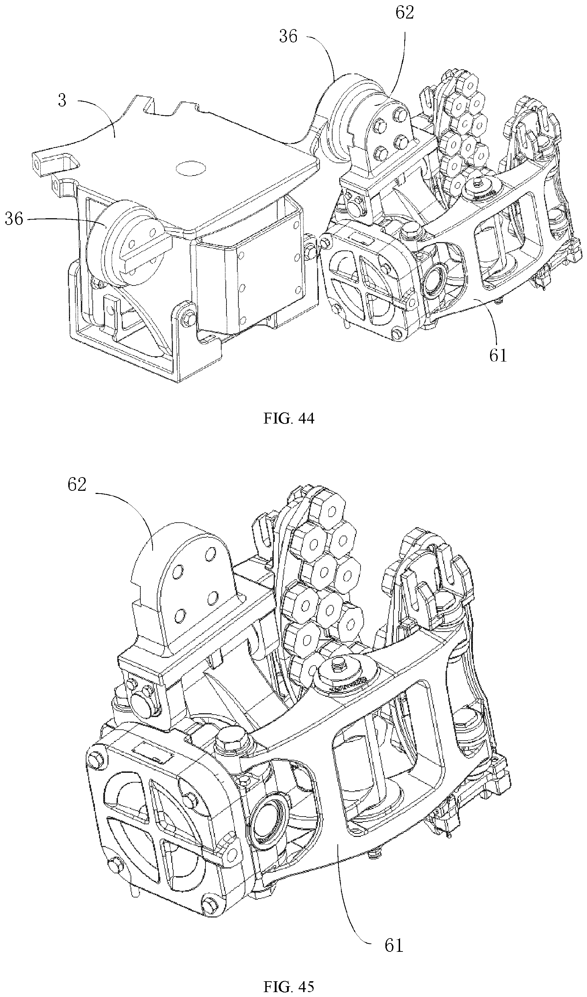

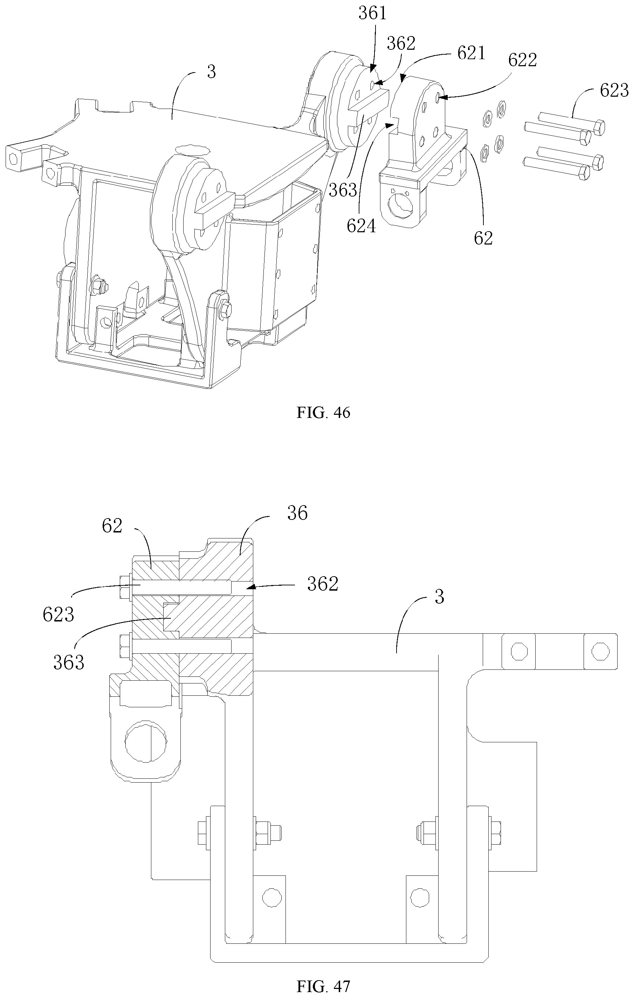

FIG. 44 is a schematic structural diagram of connection of the braking device and the connection base according to the second embodiment of this application; FIG. 45 is a schematic structural diagram of the braking device according to the second embodiment of this application; FIG. 46 is an exploded view of an assembly of a braking unit connector in the braking device and the connection base according to the second embodiment of this application; and FIG. 47 is a cross - sectional view of the assembly of the braking unit connector in the braking device and the connection base according to the second embodiment of this application.

As shown in FIGS. 1 and 44 to 47, the braking device 6 includes a braking unit 61 and the braking unit connector 62. The braking unit connector 62 is configured to connect the braking unit 61 to the connection base 3. The braking unit connector 62 has a first vertical mounting surface configured to be attached to a second vertical mounting surface on the connection base 3 to implement assembly and connection.

Specifically, brake mounting bases 36 are arranged at the outer side of the connection base 3, and specifically, at the top of the second base body outer side plate 323 located at the outer side of the connection base 3. One connection base 3 is provided with two brake mounting bases 36 each connected with one corresponding braking device 6.

The brake mounting base 36 is provided with the second vertical mounting surface 361. Correspondingly, the braking unit connector 62 is provided with the first vertical mounting surface 621 facing the second vertical mounting surface 361. The first vertical mounting surface 621 and the second vertical mounting surface 361 are both vertical surfaces. The first vertical mounting surface 621 and the second vertical mounting surface 361 are closely attached and can be connected by means of bolting, clamping, or the like. In this embodiment, mounting base threaded holes 362 are formed in the brake mounting base 36, and a centerline of the mounting base threaded hole 362 is vertical to the second vertical mounting surface 361; that is, the mounting base threaded hole 362 extends in the horizontal direction. Correspondingly, the braking unit connector 62 is provided with brake connector bolt holes 622, and a centerline of the brake connector bolt hole 622 is vertical to the first vertical mounting surface 621; that is, the brake connector bolt hole 622 extends in the horizontal direction. A brake connecting bolt 623 is used to pass through the brake connector bolt hole 622 and then to be fixed in the mounting base threaded hole 362 by thread fitting.

The above-mentioned brake connecting bolts 623 connect the braking unit 61 and the connection base 3 together, and their ends are subjected to the gravitational force of the braking unit 61. The brake connecting bolts 623 may be bent during long-term running, which affects the relative position between the braking unit and the wheel. In order to avoid the problem, the following improvements can be made.

The first vertical mounting surface 621 is provided with a first support portion, and correspondingly, the second vertical mounting surface 361 is provided with a second support portion. The second support portion matches the first support portion in shape and is configured to apply an upward supporting force to the first support portion, thereby relieving the vertical force on the brake connecting bolts 623.

Specifically, the above-mentioned first support portion may be configured as a support groove 624 formed in the first vertical mounting surface 621 and extending in the horizontal direction. The support groove 624 is located at the middle position of the first vertical mounting surface 621 along the vertical direction. Two brake connector bolt holes 622 are symmetrically arranged above the support groove 624 and two brake connector bolt holes 622 are symmetrically arranged below the support groove 624. The above-mentioned second support portion is configured as a support key 363 protruding from the second vertical mounting surface 361. The support key 363 extends in the horizontal direction and is located at the middle position of the second vertical mounting surface 361 along the vertical direction. Two mounting base threaded holes 362 are symmetrically arranged above the support key 363 and two mounting base threaded holes 362 are symmetrically arranged below the support key 363. The height of the support key 363 protruding from the second vertical mounting surface 361 is less than the depth of the support groove 624, and the support key 363 can be accommodated in the support groove 624 to support the braking unit connector 62.

A center distance between the brake mounting base 36 and the connection base 3 is relatively short; that is, a moment arm corresponding to the braking unit 61 is relatively short, so that a torque received by the brake mounting base 36 is small and the brake mounting base 36 is not prone to deformation. In this way, the position of the braking unit 61 will not change, thus ensuring that the braking unit 61 can always be located on both sides of the brake disc 124 in the wheel 12, and the braking effect can be better achieved during the braking process.

The connection between the braking unit connector 62 and the braking unit 61 may be implemented by means of bolting, welding, clamping, or the like, which is not specifically limited in this embodiment.

On the basis of the above technical solution, the connection forms of various dampers in the bogie are described in detail as follows.

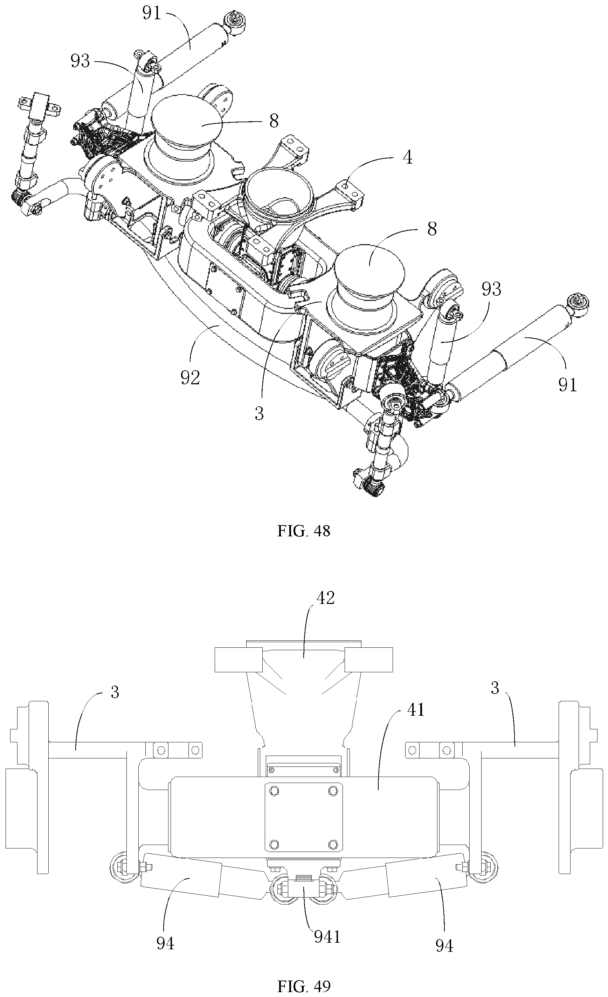

FIG. 48 is a schematic structural diagram of connection of the connection base and various dampers according to the second embodiment of this application. As shown in FIGS. 1 and 48, each anti-yaw damper 91 extends in the longitudinal direction and has one end connected to the connection base 3 and the other end connected to the vehicle body. Each vertical damper 93 extends in the vertical direction and has one end connected to the connection base 3 and the other end connected to the vehicle body. Each anti-roll torsion bar 92 extends in the lateral direction and two ends of the anti-roll torsion bar 92 are respectively connected with the connection bases 3 on both sides. The two ends of the anti-roll torsion bar 92 are each provided with a vertical connecting rod extending in the vertical direction to be connected with the vehicle body. Each lateral damper 94 extends in the lateral direction and has one end connected to the traction pin 42 and the other end connected to the connection base 3.

The structures of the anti-yaw damper 91, the anti-roll torsion bar 92, the vertical damper 93 and the lateral damper 94 can all be implemented with reference to the prior art. In this embodiment, only the connection between the dampers and the connection base 3 is described in detail.

The outer surface of the connection base 3 is provided with a damper mounting portion 324 for connecting the anti-yaw damper 91, the anti-roll torsion bar 92 and the vertical damper 93. Specifically, a damper mounting base 97 is configured to be fixed on the damper mounting portion 324, and the anti-yaw damper 91, the anti-roll torsion bar 92 and the vertical damper 93 are all connected to the damper mounting base 97.

The above-mentioned damper mounting base 97 can be welded into a box-shaped structure by using steel plates, and connecting openings for connecting the dampers are formed in the damper mounting base 97.

FIG. 49 is a schematic structural diagram of connection of the lateral damper with the traction pin and the connection base according to the second embodiment of this application. As shown in FIG. 49, each lateral damper 94 extends in the lateral direction and has one end connected to the traction pin 42 and the other end connected to the connection base 3. Specifically, a connecting hole is formed in the second base body inner side plate 322 in the connection base 3, and an outer end of the lateral damper 94 can be fixed by a bolt passing through the connecting hole and fitted with a nut.

A lateral damper mounting base 941 is connected to the bottom end of the traction pin 42, and the lateral damper mounting base 941 can be fixed on the traction pin 42 by bolts. An inner end of the lateral damper 94 can be fixedly connected to the lateral damper mounting base 941 by bolts.

Further, as shown in FIGS. 1, 28 to 31, 33 and 34, if the side beam 2 is made of a carbon fiber, a glass fiber and other fiber materials, the elasticity of the side beam 2 is good, but the rigidity of the side beam 2 is not enough to achieve a good anti-roll effect. Therefore, an anti-roll link 96 can be configured to be connected between the simplex pull rods 95 on two lateral sides. The anti-roll links 96 extend in the lateral direction. For example, when the vehicle passes through a cross triangular pit, the height difference between the wheels on two sides is large and the relative position of the two side beams and the vehicle body does not change; as a result, the links are twisted. When the vertical height of a wheel 12 is too high, the anti-roll link 96 can exert a downward vertical force on the wheel, so that the wheel is closely attached to the track, thus avoiding a derailment accident and reducing the risk of rolling over of the rail vehicle.

In the above embodiments, the axle box 13 is located at the inner side of the wheel 12. Besides, the axle box 13 may also be arranged at an outer side of the wheel 12, and correspondingly, the ends of the side beam 2 also extend to the outer sides of of the wheels 12 so as to be assembled with the axle boxes 13 through the primary suspension devices 7. The connection base 3 is connected with the axle box 13 through the simplex pull rod 95, the connection base 3 is also connected with the braking devices 6, and the positions of the braking devices 6 correspond to the positions of the wheels 12. Therefore, the structure of the connection base 3 can be adaptively adjusted to meet the assembly of various parts.

When the axle box 13 is located at the outer side of the wheel 12, the bearing is arranged between the box body 131 of the axle box 13 and the axle 11. For the powered bogie using the direct drive motor 51, a bearing is also arranged between the motor housing 511 and the rotor 512 to ensure the normal operation of the direct drive motor 51.

### Third embodiment

This embodiment provides a rail vehicle using the bogie according to any of the above-mentioned embodiments. The rail vehicle according to this embodiment adopts the bogie described above, two independent side beams span over the two wheel sets, the two side beams are parallel to each other, and ends of the side beams are located above the axle boxes and supported by the axle boxes; the primary suspension devices are arranged between the axle boxes and the side beams; one connection base is arranged at the middle part of each side beam, and the force transmission device is connected between the two connection bases to provide a traction force or braking force for the vehicle body. Since the two side beams are independent, the advantages of small size, light weight and low manufacturing difficulty are achieved. In the subsequent assembly process with other parts, the side beams can be hoisted easily and conveniently, which can simplify the operation of alignment.

In the description of this application, it should be understood that the orientations or positional relationships, indicated by the terms "central", "longitudinal", "lateral", "length", "width", "thickness", "on", "under", "front", "rear", "left", "right", "vertical", "horizontal", "top", "bottom", "inside", "outside", or the like, are based on the orientations or positional relationships shown in the drawings and are only for the purpose of facilitating and simplifying the description of this application, rather than indicating or implying that the described device or element must have a particular orientation or must be constructed and operated in a particular orientation, and therefore they cannot be construed as limiting this application.

Moreover, the terms "first" and "second" are used for descriptive purposes only and are not to be construed as indicating or implying a relative importance or implicitly indicating the number of technical features indicated. Thus, features defined by the term "first" or "second" may include one or more such features, either explicitly or implicitly. In the description of this application, the meaning of "a plurality of" is at least two, such as two, three, etc., unless specifically defined otherwise.

In this application, unless otherwise stated and defined explicitly, the terms such as "install", "link", "connect", and "fix" should be understood in a broad sense; for example, a connection may be a fixed connection, a detachable connection, or an integrated connection; may be a mechanical connection, an electrical connection or intercommunication; and may be a direct connection, an indirect connection through an intermediate medium, or a communication inside two components or interaction between two components. For those skilled in the art, the specific meanings of the above terms in the present application can be understood based on a specific situation.

## Claims

1. A bogie, comprising:
two wheel sets arranged in parallel, each wheel set including an axle (11) and two wheels (12) symmetrically arranged on the axle;
two side beams (2) spanning over the two wheel sets, the two side beams (2) being parallel with each other;
axle boxes (13) arranged on the axles (11), located under the side beams (2) adjacent to inner sides of their respective wheels (12), and configured to support the side beams (2);
primary suspension devices (7), each primary suspension device being arranged between one of the axle boxes (9) and the respective side beam (30);
two connection bases (3) each arranged at a middle part of respective side beam (2), each of connection bases (3) is connected to the axle boxes (13) of the respective side beam (2) by simplex pull rods (95), and wherein opposite simplex pull rods (95) of the two side beams (2) are connected by anti-roll links (96) to exert a downward vertical force when there is a difference in elevation between the wheels (12); and
a force transmission device (4) connected between the two connection bases (3), the force transmission device (4) being further configured to be connected to a vehicle body.

2. The bogie according to claim 1, further comprising:
driving devices (5) arranged on the wheel sets and configured to directly drive the axles (11) to rotate.

3. The bogie according to claim 1, further comprising:
braking devices (6) connected to the connection bases (3) and configured to clamp the wheels (12) during a braking process.

4. The bogie according to claim 1, wherein in terms of a lateral width, the side beam (2) is wide in the middle and narrow at two ends; in terms of a vertical thickness, the side beam (2) is thick in the middle and thin at two ends, and a middle part of the side beam (2) is recessed downward to form a fish belly shape.

5. The bogie according to claim 1 or 4, wherein the primary suspension device (7) comprises:
a primary rigid support base layer (701);
primary rigid support layers (701) and primary elastic buffer layers (702) that are arranged above the primary rigid support base layer (701) and alternately stacked, the outermost primary rigid support layer (701) being in contact with a bottom surface of the side beam (2).

6. The bogie according to claim 1, wherein the side beam (2) is configured as a carbon fiber beam or a glass fiber beam.

7. The bogie according to claim 2, wherein the driving device (5) comprises:
a direct drive motor (51) located between two wheels (12), the direct drive motor (51) comprising a motor housing (511), a stator and a rotor (512), the rotor (512) being connected with the axle (11), the stator being connected with the motor housing (511); and
balance rods (52) connected between the motor housing (511) and the connection bases (3).

8. The bogie according to claim 7, wherein the axle box (13) is located at an inner side of the wheel (12); the motor housing (511) is connected with a box body of the axle box (12).

9. A rail vehicle, comprising the bogie according to any of claims 1 to 8.

## Patentansprüche

1. Drehgestell, umfassend:
zwei parallel angeordnete Radsätze, wobei jeder Radsatz eine Achse (11) und zwei symmetrisch auf der Achse angeordnete Räder (12) aufweist;
zwei Seitenträger (2), die sich über die beiden Radsätze erstrecken, wobei die beiden Seitenträger (2) parallel zueinander verlaufen;
Achsgehäuse (13), die auf den Achsen (11) angeordnet sind und sich unter den Seitenträgern (2) neben den Innenseiten ihrer jeweiligen Räder (12) befinden und zum Stützen der Seitenträger (2) ausgebildet sind;
primäre Aufhängungsvorrichtungen (7), wobei jede primäre Aufhängungsvorrichtung zwischen einem der Achsgehäuse (9) und dem jeweiligen Seitenträger (30) angeordnet ist;
zwei Verbindungsbasen (3), die jeweils an einem Mittelteil des jeweiligen Seitenträgers (2) angeordnet sind, wobei jede der Verbindungsbasen (3) mit den Achsgehäusen (13) des jeweiligen Seitenträgers (2) durch Simplex-Zugstangen (95) verbunden ist, und
wobei die einander gegenüberliegenden Simplex-Zugstangen (95) der beiden Seitenträger (2) durch Anti-Roll-Links (96) verbunden sind, um eine nach unten gerichtete vertikale Kraft auszuüben, wenn ein Höhenunterschied zwischen den Rädern (12) vorhanden ist; und
eine Kraftübertragungsvorrichtung (4), die zwischen den beiden Verbindungsbasen (3) verbunden ist, wobei die Kraftübertragungsvorrichtung (4) ferner zur Verbindung mit einer Fahrzeugkarosserie ausgebildet ist.

2. Drehgestell nach Anspruch 1, ferner umfassend:
Antriebsvorrichtungen (5), die an den Radsätzen angeordnet und dazu ausgebildet sind, die Achsen (11) direkt in Drehung zu versetzen.

3. Drehgestell nach Anspruch 1, ferner umfassend:
Bremsvorrichtungen (6), die mit den Verbindungsbasen (3) verbunden und zum Festklemmen der Räder (12) während eines Bremsvorgangs ausgebildet sind.

4. Drehgestell nach Anspruch 1, wobei der Seitenträger (2) in Bezug auf die seitliche Breite in der Mitte breit und an beiden Enden schmal ist; der Seitenträger (2) in Bezug auf die vertikale Dicke in der Mitte dick und an beiden Enden dünn ist und ein Mittelteil des Seitenträgers (2) nach unten vertieft ist, um eine Fischbauchform zu bilden.

5. Drehgestell nach Anspruch 1 oder 4, wobei die primäre Aufhängungsvorrichtung (7) Folgendes umfasst: eine primäre starre Stützbasisschicht (701);
primäre starre Stützschichten (701) und primäre elastische Pufferschichten (702), die über der primären starren Stützbasisschicht (701) angeordnet und abwechselnd gestapelt sind, wobei die äußerste primäre starre Stützschicht (701) in Kontakt mit einer Bodenfläche des Seitenträgers (2) ist.

6. Drehgestell nach Anspruch 1, wobei der Seitenträger (2) als Kohlefaserträger oder als Glasfaserträger ausgebildet ist.

7. Drehgestell nach Anspruch 2, wobei die Antriebsvorrichtung (5) Folgendes umfasst:
einen Direktantriebsmotor (51), der zwischen zwei Rädern (12) angeordnet ist, wobei der Direktantriebsmotor (51) ein Motorgehäuse (511), einen Stator und einen Rotor (512) umfasst, wobei der Rotor (512) mit der Achse (11) verbunden ist und der Stator mit dem Motorgehäuse (511) verbunden ist; und
Ausgleichsstangen (52), die zwischen dem Motorgehäuse (511) und den Verbindungsbasen (3) verbunden sind.

8. Drehgestell nach Anspruch 7, wobei das Achsgehäuse (13) an einer Innenseite des Rades (12) angeordnet ist; das Motorgehäuse (511) mit einem Gehäusekörper des Achsgehäuses (12) verbunden ist.

9. Schienenfahrzeug, umfassend das Drehgestell nach einem der Ansprüche 1 bis 8.

## Revendications

1. Bogie, **caractérisé en ce qu'**il comprend : deux groupes de roues arrangés parallèlement, dont chaque inclut un essieu (11) et deux roues (12) arrangées symétriquement sur l'essieu ;
deux poutres latéraux (2) qui enjambent lesdits deux groupes de roues et s'arrangent parallèlement l'une à l'autre;
des boîtes d'essieux (13) arrangées sur les essieux (11), situées sous lesdites poutres latéraux (2) adjacentes à des côtés intérieurs des roues (12) respectives desdites poutres latéraux (2), et configurées pour supporter lesdites poutres latéraux (2) ;
des dispositifs de suspension primaires (7), dont chaque est arrangé entre l'une desdites boîtes d'essieux (13) et la poutre latérale de cette boîte d'essieux;
deux bases de liaison (3), dont chaque est arrangée sur une partie centrale de l'une desdites poutres latéraux (2), et liée auxdites boîtes d'essieux (13) de cette poutre latérale (2) par des tiges de traction simplex (95), dont des tiges de traction simplex opposées (95) desdites deux poutres latéraux (2) sont liées par des liens antiroulis (96) pour exercer une force verticale vers le bas lorsqu'il y a une différence d'élévation entre les roues (12) ; et
un dispositif de transmission de force (4) lié entre lesdites deux bases de liaison (3), qui est en outre configuré pour se lier à une carrosserie de véhicule.

2. Bogie selon la revendication 1, **caractérisé en ce qu'**il comprend en outre des dispositifs d'entraînement (5) arrangés sur lesdits groupes de roues et configurés pour entraîner directement les essieux (11) à tourner.

3. Bogie selon la revendication 1, **caractérisé en ce qu'**il comprend en outre des dispositifs de freinage (6) liés auxdites bases de liaison (3) et configurés pour serrer les roues (12) pendant un processus de freinage.

4. Bogie selon la revendication 1, **caractérisé en ce qu'**en matière de largeur latérale, la poutre latérale (2) est large au milieu et étroite aux deux extrémités ; en matière d'épaisseur verticale, la poutre latérale (2) est épaisse au milieu et mince aux deux extrémités, et une partie centrale de la poutre latérale (2) s'affaisse afin de former une forme de ventre de poisson.

5. Bogie selon la revendication 1 ou 4, **caractérisé en ce que** ledit dispositif de suspension primaire (7) comprend : une couche de support basse rigide primaire (701) ;
des couches de support rigides primaires (701) et
des couches tampons élastiques primaires (702) qui sont arrangées au-dessus desdites couches de support rigides primaires (701) et qui sont empilées sur l'autre alternativement,
la couche la plus externe de ces couches de support rigides primaires (701) touche une surface inférieure de la poutre latérale (2).

6. Bogie selon la revendication 1, **caractérisé en ce que** la poutre latérale (2) est configurée comme une poutre en fibre de carbone ou une poutre en fibre de verre.

7. Bogie selon la revendication 2, **caractérisé en ce que** ledit dispositif d'entraînement (5) comprend :
un moteur à entraîner directement (51) situé entre deux roues (12), qui inclut un carter de moteur (511), un stator lié audit carter de moteur (511), un rotor (512) lié à l'essieu (11); et
des tiges d'équilibrage (52) liées entre ledit carter de moteur (511) et lesdites bases de liaison (3).

8. Bogie selon la revendication 7, **caractérisé en ce que** la boîte d'essieux (13) est située sur un côté intérieur de la roue (12) ; ledit carter de moteur (511) est lié à un corps de boîte de la boîte d'essieux (13).

9. Véhicule à rail, **caractérisé en ce qu'**il comprend le bogie selon l'une quelconque des revendications 1 à 8.
